# EUROPEAN PATENT SPECIFICATION

(11) **EP 4 124 556 B1**
(45) Date of publication and mention of the grant of the patent: **06.03.2024**
(21) Application number: 22187001.7
(22) Date of filing: 26.07.2022
(51) Int. Cl.: B62M 6/55, B62M 6/50, B62J 45/411, B62J 45/413, B62J 45/421, B62M 3/00, B62M 11/02, G01L 3/10

(54) **MOTOR UNIT AND ELECTRICALLY-ASSISTED BICYCLE**
MOTOREINHEIT UND ELEKTRISCH UNTERSTÜTZTES FAHRRAD
UNITÉ DE MOTORISATION ET BICYCLETTE À ASSISTANCE ÉLECTRIQUE

(30) Priority: 26.07.2021 EP 21187584
(43) Date of publication of application: 01.02.2023
(60) Divisional application: 24154352.9
(73) Proprietor: TQ-Systems GmbH, 82229 Seefeld (DE)
(72) Inventor: HORNUNG, Heinz, Seefeld (DE)
(74) Representative: Schweiger, Martin

(56) References cited:
- FR-A1- 3 091 517
- US-A1- 2020 063 793
- US-B1- 6 418 797
- US-B2- 10 371 240

## Description

The present application relates to a motor unit and an electrically assisted bicycle.

Document FR 3 091 517 A1 discloses an assistance device for a bicycle, the assistance device comprising an electric motor, a reduction gear, and a freewheel. Said document discloses a motor unit according to the preamble of claim 1.

It is an object of the present application to provide an improved external force measurement unit and measurement method. The invention is defined in claim 1. Preferred embodiments are claimed in the dependent claims.

According to a first aspect, an external force measurement unit for measuring an external force applied to a spindle is provided.

The external force measurement unit comprises a load cell with a support ring, wherein a first flap and a second flap are arranged on the support ring, wherein the second flap is arranged opposite to the first flap on the support ring, wherein each flap is arranged in a radial direction to the outside of the outer ring, and a first flap end and a second flap end being arranged at respective ends of the first flap and the second flap.

The external force measurement unit further comprises a first strain gauge which is arranged on the first flap and a second strain gauge, which is arranged on the second flap, wherein depending on a change of length of the first flap or the second flap due to a material expand the first strain gauges and/or the second strain gauge is adapted to change their respective resistance.

The external force measurement unit further comprises an evaluation unit, which is adapted to measure a resistance of the first strain gauge and the second strain gauge, which is further adapted to determine an offset of the external force being induced by the weight of the spindle, and which is further adapted to determine a position of a lever arm of the spindle and to determine the external force, which is applied to the adapted spindle based on the measured resistance and the determined offset of the first force.

The external force measurement unit further comprises a first bearing support to take up a first bearing in a first bearing seat, the first bearing with a first outer ring, wherein the first outer ring is mounted to the first bearing seat to transmit a first force, wherein the external force comprises the first force, which is transmitted to the first bearing from the spindle to a first inner ring and a second force, which is absorbed by an adapted second bearing, and the first inner ring is connected to the first outer rolling ring through a first bearing element to transmit the first force from the adapted spindle.

The external force measurement unit can be a system to measure a force that is applied from external. The external force measurement unit measures a change of resistance. Depending on the measured resistance the external force is calculated.

The external force is applied to the external force measurement from outside of the unit. Mainly the external force can be applied by a human. For example, the external force is applied to the pedal of a bike by the foot of a person.

The pedal can be part of a bike and can rotate. So, the external force is mostly applied perpendicular to the pedal.

The spindle can be a shaft, a hollow shaft or a cylinder. The first bearing and the second bearing receive the spindle. The bearing is a machine element that constrains relative motion to only the desired motion and reduces friction between moving parts. The bearings can for example be a rolling-element bearing, a plain bearing, a ball bearing, a roller bearing, a jewel bearing, a fluid bearing, a magnetic bearing or a flexure bearing.

The load cell with the support ring is a device to receive the bearing, for example, by an engineering fit. The load cell can be made of aluminum or steel or any other suitable material. The engineering fits are used as part of geometric dimensioning and tolerancing when a part or assembly is designed. A fit is a clearance between two mating parts, and the size of this clearance determines whether the parts can, at one end of the spectrum, move or rotate independently from each other or, at the other end, are temporarily or permanently joined. The bearing can be taken up in the first bearing seat of the support ring by fixed-lot bearing arrangement, where one of the bearings is movable and the other is fixed.

The fixed bearing is mounted on the element to be supported in such a way that it cannot move in the axial direction. The locating bearing thus absorbs both radial and axial forces. The fit can also be a load-bearing support bearing, the axial force is divided between both bearings. Each of the two bearings absorbs axial force in one direction so that both bearings together can absorb all axial forces.

The first flap and the second flap are elements arranged on the load cell. Each flap can also be named a tongue or a bracket. At least the flap can transfer a force in a predefined direction. The radial direction, in which the flap is arranged, is pointing from the center of the load cell to the outside. Both flaps can be arranged on each side on the ends of a line through the center. So, the flaps are on opposite sides of the load cell. The flaps can partly surround the load cell. The flaps can have a gap in between.

The flap ends can also be arranged on the line through the center. The flap's ends are arranged on the proximal end to the load cell. On each proximal end of each flap is a flap end arranged. Each flap end can clamp an angle to the corresponding flap. In an example embodiment, the angle is 90° degree.

The strain gauge is a device used to measure strain on an object. In this case, the object is each flap. A strain gauge can consist of an insulating flexible backing which supports a metallic foil pattern. As the flap is deformed, the foil is deformed, causing its electrical resistance to change. This resistance change, usually measured using a Wheatstone bridge, is related to the strain by the quantity known as the gauge factor. In an example embodiment, the strain gauge mainly measures a change of length along the radial direction.

The evaluation unit can, for example, be a microprocessor or a logic chip. The evaluation unit can be connected to each strain gauge. As described above the evaluation unit can measure the resistances of each strain gauge. The evaluation unit can also have an output to transmit the calculated results. The output can be connected to an engine control unit to control a motor.

Through this solution, it is possible to provide a simple force measurement unit. The measurement unit has fewer components and can be easily adapted. The measurement unit can be improved in its compactness and precision. The measurement unit allows building more compact motor units with higher durability.

The external force measurement unit can be further improved by comprising a motor housing, wherein the first flap end and the second flap end are adapted to mount the load cell to a load cell carrier seat on the motor housing of the spindle, and the second outer ring is mounted to second rolling support of the motor housing.

The motor housing takes up the external force measurement unit. The measurement unit is mounted to the motor housing. The load cell is mounted through the flap ends to the motor housing. The second bearing can be mounted through a bearing support seat to the housing, as described above.

The motor housing can be part of a motor unit. The motor unit can comprise a motor, a battery holder and the external force measurement unit. The external force measurement unit can be mainly enclosed by the motor housing. The load cell can also be mounted to an outer wall of the motor housing. In particular, the ends of the spindle are arranged on an outside of the motor housing. The motor housing can at least comprise two openings to mount the spindle. The motor housing can also comprise fastening elements to mount the motor housing to a rail. The rail can be part of a bike.

Through this solution, it is possible to protect the load cell against environmental influences and mount it to the bike rail. Receiving the external force measurement unit in a motor using also improves the durability and can dampen shocks.

The external force measurement unit can be further improved in that the evaluation unit is smoothing the measured resistance of the strain gauges over time through a low pass filter.

The low pass filter can be analog. An analog filter can be an electronic circuit operating on continuous-time analog signals. In an example embodiment, the low pass filter is a digital filter. A digital filter is a system that performs mathematical operations on a sampled, discrete-time signal to reduce or enhance certain aspects of that signal. The digital filter can be part of the evaluation unit.

Through this solution, it is possible to improve the reliability of the measured resistances and fit them into a measurement series. Depending on the quality of the measured resistances the precision of calculating can be improved.

The external force measurement unit can be further improved in that the evaluation unit is determining a drift in the measured resistances of the first strain gauge and the second strain gauge over time and is recalibrating the first strain gauge and the second strain gauge by applying a drift compensation after a predefined time span.

The drift is a shift of the measurement values, in particular the measured resistances, over time. The drift can be affected by warming the strain gauges, signs of fatigue due to deflection, material creep under continuous load in the order of magnitude of the measuring range in one direction or by a sensitivity drift due to aging and hardening processes of various materials, thus requiring frequent recalibrations.

The predefined time span can also be a single event. For example, if the resistance changes relative to a previous resistance more than a predefined threshold. The time span can also be defined as numerous of rotations of the spindle.

Through this solution, it is possible to improve uniformity and the comparability of the measured resistances. This leads to a more precise calculation of the external force. This improves the overall quality of the external force measurement unit.

The external force measurement unit can be further improved by comprising a freewheel, which is form-fitted connected with the spindle.

The freewheel can be an overrunning clutch. It allows disengaging a driveshaft from the driven shaft, in particular the spindle, when the driven shaft rotates faster than the driveshaft. The freewheel can be a clamping roller freewheel, a clamp body freewheel, a pawl freewheel, a claw rings freewheel, or a wrap spring freewheel. The freewheel comprises an inner part, also called a star, and an outer part. The inner part is form-fitted connected to the spindle. The inner part can transfer a force from the outer part to the spindle.

Through this solution, it is possible to decouple the motor from the spindle, when the spindle is turning faster than the motor is able or allowed to support the external force.

The external force measurement unit can be further improved by comprising an angular encoder to determine a radial position of the spindle.

The angular encoder, which is also called a rotary encoder or a shaft encoder, is an electro-mechanical device that converts the angular position or motion of a shaft or axle to an analog or digital output signals.

The angular encoder can be an absolute encoder. The absolute encoder indicates the current spindle position. In an example embodiment, the angular encoder is an incremental encoder. The output of the incremental encoder provides information about the motion of the spindle or the change of position of the spindle. In particular, the angular encoder can be an off-axis magnetic encoder.

Through this solution, it is possible to improve the position recognition of the spindle. Using the angular encoder provides more detailed information about the position of the spindle and therefore more precise information about the position of the pedals and the pedal cranks. Thus, more detailed information corresponding to the driving situation and force management can be provided.

The external force measurement unit can be further improved in that the spindle is received inside the first bearing ring of the first bearing, and is received inside the second bearing ring of the second bearing, wherein the spindle applies the first force to the first bearing ring and a second force to the second inner bearing ring, wherein the first force and the second force are parts of the external force, which is applied to at least one end of the spindle through a lever arm.

The spindle can comprise at each side a spindle end. The spindle end can be outside of the motor housing. Each spindle end can take up the lever arm. The lever arm can be a pedal crank. The pedal crank can have a predefined length. On one side of the pedal crank, the pedal crank can be mounted to the spindle end. On the other side of the pedal crank, a pedal can be received. The external force is acting on the pedal. The pedal crank transfers the force to a spindle. The transferred force can be a torque.

Through this solution, it is possible to calculate the external force depending on the measured resistances and the lever arm length and to output a more detailed position of the pedal relative to the spindle.

The external force measurement unit can be further improved in that the evaluating unit is calculating the torque depending on the calculated force and an effective lever arm length of each lever arm, which is depending on the position of the spindle.

Depending on the position of the lever arm and the pedal the lever arm length, which has a contribution to the torque, can change. For example, if the lever arm on each end is in a vertical position the horizontal distance between the pedal and the spindle can be zero. Thus, the lever arm has hardly a contribution to the torque applied to the spindle.

While the spindle rotates, also the pedal and the pedal crank rotates. Thus, the position of the lever arm is changing over time. Depending on this change also the lever arm length, which has a contribution to the initiated torque, changes over time. The horizontal distance between the pedal and the spindle is equal to the effective lever arm length. So, the effective lever arm length can change over time depending on the pedal position.

Taking this into account the evaluation unit is calculating depending on measured resistances and the determined first force the torque, which is applied to the spindle through the lever arm.

In case that a force is acting on both pedals, which are shifted by 180° degree on each end of the spindle, mainly the external force which is acting in the tangential direction of the spindle is turning has a contribution to the torque. Through this solution, it is possible to calculate a more precise torque. A precise measurement of the torque is important to transmit improved torque information to an engine control unit. The engine control unit can control the motor more precisely and the motor can provide a more driving situation adapted torque to the spindle to support the external force applied by a human to the spindle of an electric bike.

According to a further aspect, a measuring method for measuring an external force with an external force measurement unit comprising a load cell, which receives a spindle is provided.

The method comprises the steps of changing resistance of a first strain gauge, which is arranged on the first flap due to a change of length of a first flap and changing resistance of a second strain gauge, which is arranged on a second flap, due to a change of length of a second flap, wherein each flap is arranged to the load cell.

The method further comprises the steps of measuring each resistance of the first strain gauge and the second strain gauge with an evaluation unit.

The method further comprises the steps of determining an offset of the external force being induced by the weight of the spindle with the evaluation unit.

The method further comprises the steps to determine a position of a lever arm of the spindle with the evaluation unit.

The method further comprises the steps to determine the external force, which is applied to the adapted spindle based on the measured resistances and the determined offset of the first force with the evaluation unit.

Through this method a more precise and cost-efficient measuring method to determine an external force acting on a spindle is provided.

According to a further aspect, an electrically assisted bicycle is provided, comprising an external force measurement unit.

For example, an electrically assisted bicycle is a bicycle that comprises an electric motor to support or assist the driver and an energy storage, which stores energy to be provided in the form of electrical energy to the electric motor.

The electric motor can, for example, be a hub motor or a chain motor, comprising at least one DC or AC powered electrical machine. The energy storage can, for example, be a battery or an accumulator, for example, a lead, or lithium-based battery or accumulator. Alternatively, or additionally, the energy storage can be a fuel-cell storage. The electric motor provides energy in addition to a human muscle power of the driver pedaling the bicycle with an assistance factor. An example of such an electrically assisted bicycle is an electric bicycle, such as an e-bike or pedelec.

Through this solution, it is possible to provide an electrically assisted bicycle, which has a motor unit with a load cell to measure the resistance of a strain gauge. The load cell provides an improved external force measurement unit, which is enhanced in its simplicity. So, accuracy is improved, and the manufacturing costs are decreased.

With regard to the advantages of the method and the electrically assisted bicycle, reference is made to the external force measurement unit and the embodiments as described above. It will be readily understood that individual or all steps of the method can be performed by the external force measurement unit and vice versa.

According to a further aspect a motor unit for an electrically assisted bicycle is provided, comprising a free wheel, an outer ring, an inner ring and a sprocket carrier.

The free wheel is adapted to decouple the sprocket carrier from the outer ring. Decoupling means, that the inner ring can rotate with a different speed in comparison to the sprocket carrier.

Through this solution an external applied force to the sprocket carrier is not transmitted to the inner ring in case the external force results in a faster turning speed then the speed of the inner ring. This leads to reduced friction loss.

The motor unit is further improved by comprising one free wheel.

The motor unit comprises not more than one free wheel, in particular the motor unit comprises not less than one free wheel. The number of the free wheel is equal to one.

The motor unit with only one free wheel enables to build an even more compact and smaller motor unit.

Further the motor unit comprises a motor housing, which takes up the free wheel, the outer ring, the inner ring and the sprocket carrier.

The motor housing can be made of plastic or metal. The motor housing can be shockproof and/or waterproof. The motor housing can protect the free wheel, the outer ring, the inner ring and the sprocket carrier against environmental influences.

In a further embodiment an electric motor comprises a rotor, wherein the rotor is mounted to harmonic pin ring drive.

The harmonic pin ring drive provides a small gear between the electric motor and the spindle. Minimizing the size of the gear enables to minimize the drive unit.

The motor housing can comprise a first motor housing part, a second motor housing part and a third motor housing part.

The first motor housing part can be a gear box and an exterior edging. The second motor housing part is adapted to take the load cell. The third motor housing part is adapted to take up the sprocket carrier.

Through this solution the motor housing can be fitted to a frame of a bicycle. Further a size of the motor housing can be reduced.

In a further aspect the electrically assisted bicycle comprises a motor unit, as described above.

The electrically assisted bicycle can comprise a frame. The housing of the motor unit can be mounted to the frame. The motor housing can also be integrated into the frame. The motor housing can take up the motor unit.

Reducing the size of the motor housing leads to improved driving characteristics.

In a further aspect a drive method is adapted to control an electric motor of a motor unit comprising the following steps:
- Determining a second torque with an external force measurement unit, wherein the second torque is applied to a spindle through a crank,
- Calculating a first torque based on the second torque and
- Controlling an electric motor based on the calculated second torque.

For example, the drive method can be applied to a drive unit, as described above. In particular, the drive unit can be built in an electrically assisted bicycle. The electrically assisted bicycle is driven by a user. The user applies a force to a pedal crank trough a pedal. Regarding to the measuring method, described above, a second torque is detected. The second torque can be applied by the user.

Depending on a gain factor the first torque is calculated. The first torque is provided by the electric motor. The first torque is applied through the free wheel to the spindle. Further the drive method comprises a step, wherein the turning direction of the spindle is determined.

Determining the turning directions enables to control the turning direction of the motor. By controlling the motor in both turning directions a support can be provided for each turning direction of the spindle.

With regard to the advantages of the method, the electrically assisted bicycle and the external force measurement unit, reference is made to the motor unit and the drive method.

The invention relates to a motor unit for an electric bicycle, the motor unit comprising
- an electric motor, being configured to drive a driving element,
- a spindle being connectable to pedals,
- a sprocket carrier, that is drivable in a drive direction by the driving element and by the spindle, and
- an evaluation unit being configured to detect rotation of the spindle and/or a force or torque applied to the spindle and rotation of the electric motor, and to energize the electric motor to drive in a direction against the drive direction if the spindle rotates against the drive direction,
- wherein the motor unit comprises only one single freewheeling device in the torque flow between the electric motor and the spindle.

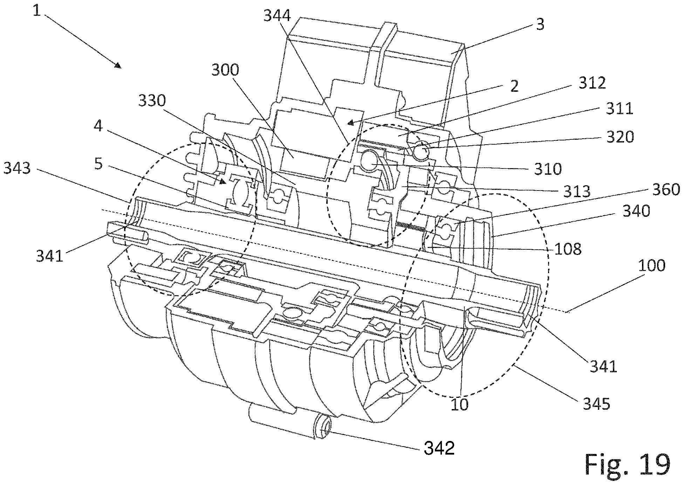

The driving element may be part of a gear that may be driven by the motor. It may be an outer ring as described further below with respect to Fig. 19. The drive direction may be a direction leading to a forward movement of the bicycle. Rotation of the spindle or the motor may be, or may comprise, a rotational speed. Rotation of the spindle against the drive direction may especially defined relative to a frame of a bicycle.

Especially, there may be only one freewheeling device between the electric motor and a chain that is driven by the sprocket carrier.

Using only one freewheeling device can reduce the size of the motor unit. The functionality provided by the evaluation unit can prevent pedals to be disengaged from feet.

The evaluation unit may also be configured to deenergize the electric motor if the spindle rotates slower and/or with less force or torque than the driving element.

According to the invention, the spindle is connected to the sprocket carrier such that the spindle and the sprocket carrier have a fixed rotational relationship.

According to the invention, the one single freewheeling device is arranged between the driving element and the sprocket carrier.

According to an implementation, the freewheeling device allows faster rotation of the sprocket carrier with respect to the driving element. Thus, a driver may use his muscle force to drive faster than corresponding to a current motor speed.

According to the invention, the evaluation unit is configured to energize the electric motor against the drive direction so that the pedals remain engaged with the feet of a driver.

According to an implementation, the evaluation unit is configured to energize the electric motor to compensate for a drag moment of the electric motor when rotating against the drive direction.

Especially, the freewheeling device can be a mechanical freewheeling device. The functionality of another freewheeling device that is typically present in prior art configurations can be performed by the evaluation unit.

According to an implementation,
- the motor unit further comprises an external force measurement unit, and
- the evaluation unit may be configured to measure a force or torque applied on the spindle using the external force measurement unit.

The external force measurement unit may comprise
- a load cell with a support ring,
- wherein a first flap and a second flap are arranged on the support ring, wherein the second flap is arranged opposite to the first flap on the support ring,
- wherein each flap is arranged in a radial direction to the outside of the support ring,
- and a first flap end and a second flap end being arranged at respective ends of the first flap and the second flap),
- a first strain gauge, which is arranged on the first flap and a second strain gauge, which is arranged on the second flap, wherein depending on a change of length of the first flap or the second flap due to a material expand the first strain gauges and/or the second strain gauge is adapted to change their respective resistance.

The motor unit may further comprise a motor housing, wherein the first flap end and the second flap end may be adapted to mount the load cell to a load cell carrier seat on the motor housing of the spindle, and the second outer ring may be mounted to a second rolling support of the motor housing.

According to an implementation, the motor unit may
- further comprise an angular encoder to determine a radial position of the spindle,
- wherein the evaluation unit may be configured to determine a rotation of the spindle using the angular encoder.

According to an implementation, the evaluation unit is configured to deenergize the electric motor either partly or completely, depending on a relationship of rotational speed, force, and/or torque between the driving element and the spindle.

According to an implementation, the evaluation unit is configured to measure and/or control a current applied to the electric motor.

According to an implementation, the evaluation unit is configured to determine rotation of the motor based on the measured current.

According to an implementation, the motor unit comprises a sprocket wheel that is in a fixed rotational relationship with the sprocket carrier, the sprocket wheel being adapted to drive a chain. Such a chain can be used to drive the bicycle.

According to an implementation, the motor unit further comprising a gear that provides for a fixed rotational relationship with a transmission ratio between the electric motor and the driving element. Especially, the electric motor may have a rotor, which may be taken as a reference for the transmission ratio.

According to an implementation, the gear is a pin-ring-gear. Reference is made to the description given elsewhere herein, which may be applied.

The invention relates further to an electrically assisted bicycle, comprising a motor unit as described herein. All variations of the motor unit may be applied.

Embodiments of the application will now be described with reference to the attached drawings, in which
Fig. 1 shows a motor unit 1 comprising an external force measurement unit,
Fig. 2 shows a schematically side view of the motor unit, which is shown in Fig. 1,
Fig. 3 shows the motor unit as shown in Fig. 1 with a freewheel in a view on a front side with the first end,
Fig. 4 shows a motor unit 1 as shown in Fig. 3 with the freewheel in a view on a backside with a second end,
Fig. 5 shows a motor unit 1 as shown in Fig. 4 with a motor housing 3, taking up the external force measurement unit with the load cell and the spindle,
Fig. 6 shows the load cell 5 in a front view from the first end of the spindle as shown in Fig. 3,
Fig. 7 shows the load cell in a back view from the second end of the spindle as shown in Fig. 4,
Fig. 8 shows a motor unit with a motor housing as shown in Fig. 5 with first fastening elements and second fastening elements,
Fig. 9 shows the angular encoder comprising a hall sensor and a magnetic ring,
Fig. 10 shows the strain gauge as shown in Fig. 1,
Fig. 11 shows the external force measurement unit assembled with the hall sensor of the angular detector in a front view,
Fig. 12 shows the external force measurement unit assembled with the hall sensor of the angular detector in a back view,
Fig. 13 shows schematically the spindle 10 with the pedals and the pedal cranks in a vertical position while the external forces fₑ act on the pedals in a side view,
Fig. 14 shows schematically the spindle 10 with the pedals and the pedal cranks in a horizontal position while the external forces fₑ act on the pedals in a side view,
Fig. 15 shows in a graph typical signal with the measured resistances of each strain gauge mapped to each pedal,
Fig. 16 shows in a graph typical signal with the measured resistances of each strain gauge mapped to each pedal for a low cadence without motor support,
Fig. 17 shows in a graph typical signal with the measured resistances of each strain gauge mapped to each pedal for a high cadence without motor support,
Fig. 18 shows a cross section view along the intersection line AA of the load cell 5 with the spindle 10 mounted in the motor housing 3 as shown in Fig. 8,
Fig. 19 shows a schematically section view of the motor unit 1 with the electric motor 2 and a freewheel,
Fig. 20 shows a schematically front side view of a transmitter bearing 310 with an outer ring 313, a pin-ring 311 and an inner ring 312,
Fig. 21 shows a schematically back side view of the transmitter bearing 310 as shown in Fig. 20,
Fig. 22 shows a schematically back view of the transmitter bearing 310 as shown in Fig. 20,
Fig. 23 shows a perspective back side view of the motor unit 1 and
Fig. 24 shows a perspective front side view of the motor unit 1.

In the figures, the same or similar features are referenced by the same reference numerals.

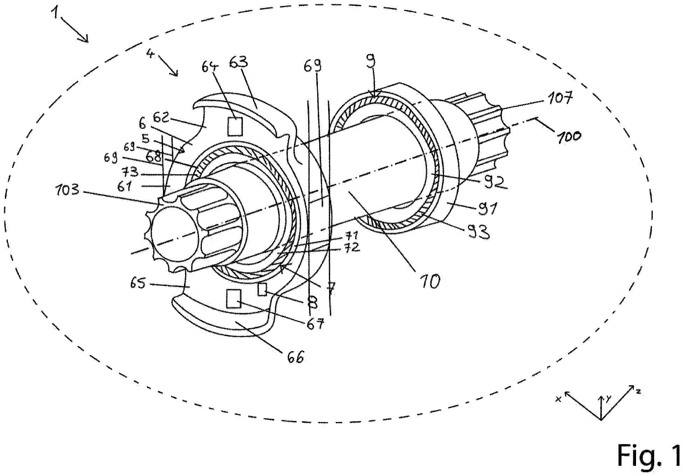

Fig. 1 shows a motor unit 1 comprising an external force measurement unit 4.

The measurement unit 4 comprises a load cell 5 with a first bearing support 6. The first bearing support 6 comprises a support ring 61. A first flap 62 is arranged on the support ring 61. The support ring 61 is also part of the load cell 5. The first flap 62 partially surrounds the support ring 61. The first flap 62 is arranged on an opposite side to a second flap 65. The second flap 65 also partially surrounds the support ring. The first flap 62 and the second flap 65 have an equal size. The first flap 62 and the second flap 65 are arranged in a radial direction to the support ring 61 on an outside of the load cell 5.

The first flap 62 is clamping an angle of 90° degree to the support ring 61. Also, the second flap 65 is clamping an angle of 90° Degree to the support ring 61.

A First flap end 63 is arranged on an end of the first flap 62. The first flap 62 comprises a first strain gauge 64 in an area between the first flap 62 and the support ring 61. A second flap end 66 is arranged on an end of the second flap 65.

The second flap 65 comprises a second strain gauge 67 in an area between the second flap 65 and the support ring 61.

The first bearing support 6 also comprises a first bearing seat 68, which takes up a first bearing 7. The first bearing 7 comprises a first outer ring 71 and a first inner ring 72. at least one first bearing element 73 is arranged between the first outer ring 71 and the first inner ring 72.

An evaluation unit 8 is arranged on the load cell 5.

The motor unit 1 also comprises a second bearing 9. The second bearing 9 comprises a second outer ring 91. The second outer ring 91 is taken up in a support bearing seat, which is not shown here, and a second inner ring 92. At least one second bearing element 93 is arranged between the second outer ring 91 and the second inner ring 92.

The first inner ring 72 of the first bearing 7 and the second inner ring 92 takes up a spindle 10 with a spindle symmetry axis 100 as shown in Fig.1. The spindle 10 comprises a first end 103 and a second end 107.

The motor unit 1 also comprises an angular encoder, which is not shown here, for detecting the change of the angular position of the spindle 10. In an embodiment not shown here, the angular encoder detects the absolute angular position of the spindle 10.

The load cell 5 also comprises mechanical guiding 69. The mechanical guiding 69 lock a movement of the loadcell 5 in x-direction and z- directions.

In an embodiment the mechanical guiding 69 are on an outside of the load cell 5 in an 90°-degree angle next to each flap. The mechanical guiding 69 is comprising a plastic pin, which is not shown here, which locks the movement of the load cell 5 in x-direction and z- directions. The plastic pin is arranged on the mechanical guiding and runs along a guidance, which is arranged on the loading cell carrier seat.

In a further embodiment each flap end 63, 66 can have or cooperate with a plastic pin on each end along the z-axis. The plastic pins are running in a guidance. This mechanical guiding also locks the movement of the load cell at least in x-direction.

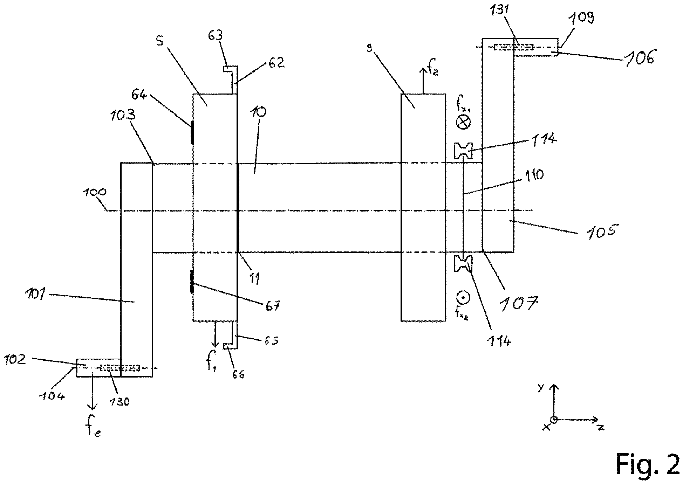

Fig. 2 shows a schematically side view of the motor unit 1, which is shown in Fig. 1.

On the first end 103, of the spindle 10 is a first crank 101 arranged. The first crank 101 is connected through a first pedal spindle 130 with a first symmetrical axis 104 as shown in Fig. 2 to a first pedal 102. The first pedal 102 is rotatable around the first symmetrical axis 104 and transfers a force to the first crank 101. The second crank 105 is connected through a second pedal spindle 131 with a second symmetrical axis 109, as shown in Fig. 2, to a second pedal 106. The second pedal 106 is rotatable around the second symmetrical axis 109, as shown in Fig. 2, and transfers a force to the second crank 105.

Fig. 2 also shows the angular encoder 11. The angular encoder 11 is mounted to the load cell 5, which takes up the first bearing 7. The angular encoder 11 is arranged between the first bearing 7 and the second bearing 9. The angular encoder 11 is arranged on the load cell 5.

Indicated is also, that the first pedal 102 transfers an external force fₑ to the spindle 10. Further the spindle 10 transfers a first force f₁ to the first bearing 7 and a second force f₂ to the second bearing 9. Also, a first horizontal force fₓ₁ and a second horizontal force fₓ₂ are transferred from a chain 114 to a deflector blade 110.

The deflector blade 110 is mounted to the spindle 10. The first force fₓ₁ and the second force fₓ₂ are nearly perpendicular to the external force fe, the first force f1 and the second force f₂. The external force fe, the first force f₁, and the second force f₂ act along a y-axis, as shown in Fig. 2. Forces working along the y-axis are vertical forces.

The first horizontal force fₓ₁ and the second horizontal force fₓ₂ act along an x-axis, as shown in Fig. 2. The first horizontal force fₓ₁ and the second horizontal force fₓ₂ act in a horizontal direction.

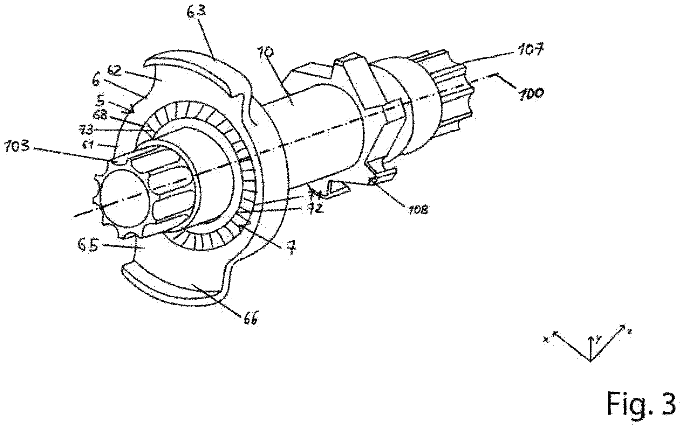

Fig. 3 shows the motor unit 1 as shown in Fig. 1 with a freewheel 108 in a view on a front side with the first end 103.

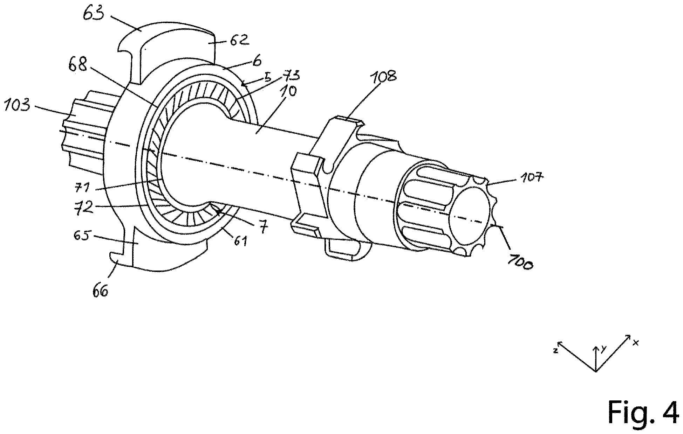

On one side of the first bearing 7, the spindle 10 comprises the first end 103. On the other side of the first bearing 7, the spindle 10 comprises the freewheel 108 and the second end 107. The freewheel 108 is a roller freewheel. A star of the freewheel 108 has a form-locked connection to the spindle 10. Fig. 4 shows a motor unit 1 as shown in Fig. 3 with the freewheel 108 in a view on a backside with a second end 107.

The freewheel 108 comprises a freewheel clutch. The freewheel clutch has spring-loaded rollers, which are not shown here, inside a driven cylinder, which is not shown here. A star of the freewheel clutch is arranged on the spindle 10. At least one of several parts of the star has on one side a slant. On the other side, one part of the star has an edge in radial direction to the spindle 10.

The edge is next to the spindle 10. A proximal edge is tangentially arranged to the spindle 10. A cover covers the front side of the freewheel 108. Each part of the star comprises a notch next to the radial side. The notch is arranged on the averted side from the slant.

In another embodiment, the freewheel is a clamping freewheel. The clamping freewheel comprises at least two saw-toothed, spring-loaded discs pressing against each other with the toothed sides together, somewhat like a ratchet. Rotating in one direction, the saw teeth of the drive disc lock with the teeth of the driven disc, making it rotate at the same speed.

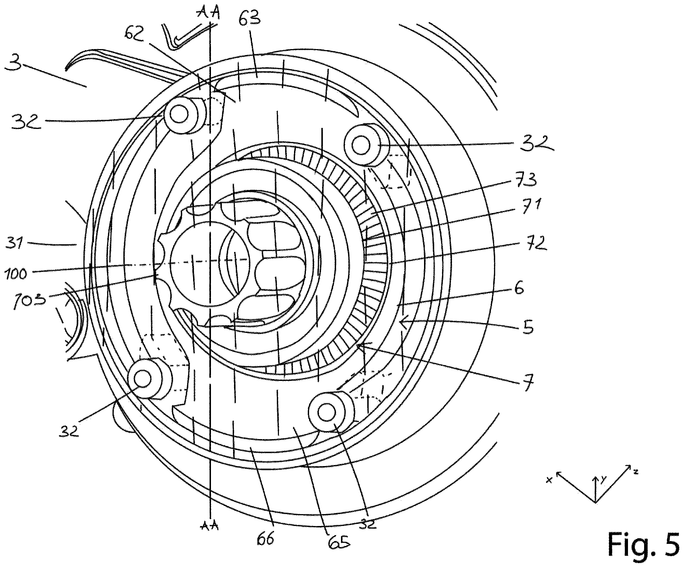

Fig. 5 shows a motor unit 1 as shown in Fig. 4 with a motor housing 3, taking up the external force measurement unit 4 with the load cell 5 and the spindle 10.

The motor housing 3 is taking up the motor unit 1. The motor unit 1 is mounted to the motor housing 3 through a holding plate 31 with four screws 32. The holding plate 31 is holding the first flap end 63 and the second flap end 66. The first flap end 63 and the second flap end 66 is clamped between the motor housing 3 and the holding dish 31 through the screws 32. Due to the clamping of the first flap end 63 and the second flap end 66 each flap 62, 65 is also fixed.

Due to the fixing of each flap 62, 65 the load cell 5 with the first bearing support 6 and the support ring 61 is fixed in a load cell carrier seat, which is not shown here, of the motor housing 3. The motor housing 3 is also comprising a support bearing seat, which is not shown here, to mount the second bearing, which is also not shown here.

The spindle comprises the first end 103, which is pointing away from the motor housing 3.

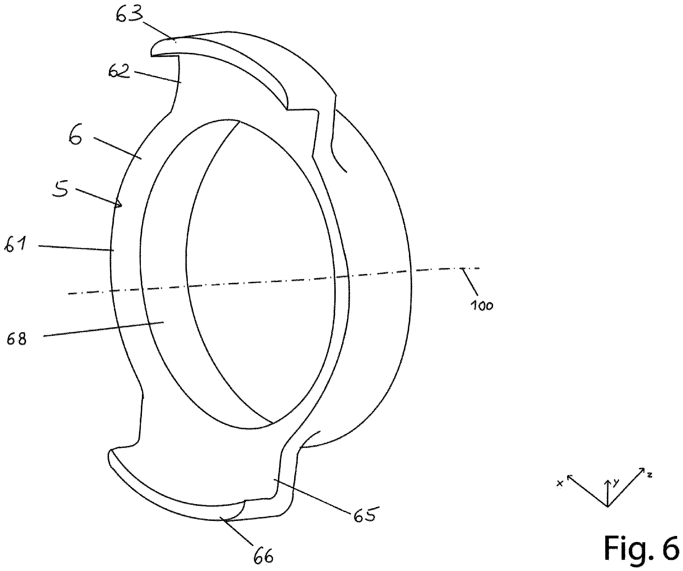

Fig. 6 shows the load cell 5 in a front view from the first end 103 of the spindle 10 as shown in Fig. 3.

An edge between the support ring 61 and the first bearing seat 68 is rounded off.

Each flap 62, 65 has less than half a size of the support ring 61 in direction of the spindle symmetrical axis 100. One side in direction of the spindle symmetrical axis 100 of each flap 62, 65 is arranged on a same plane as the support ring 61. The opposite side is connected to the support ring through a smooth connection.

Each flap end 63, 66 are arranged on a proximal end to the support ring 61. The flap end 63, 66 are curved in nearly the same shape as the support ring 61. Edges of each flap end 63, 66 are rounded off. The flap end 63, 66 are pointing towards the front side of the load cell 5. The flap ends 63, 65 have nearly a same width as each flap 62, 64.

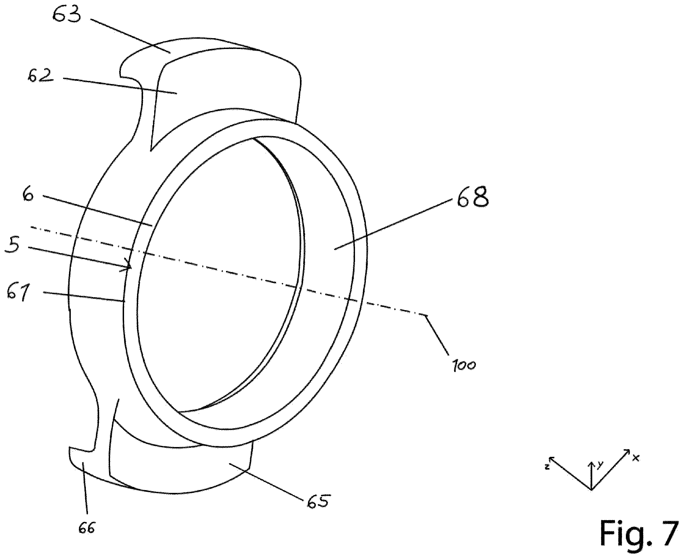

Fig. 7 shows the load cell 5 in a back view from the second end 107 of the spindle 10 as shown in Fig. 4.

The support ring 61 relates to a leading edge to the first bearing seat 68. The leading edge is arranged inside the first bearing seat 68.

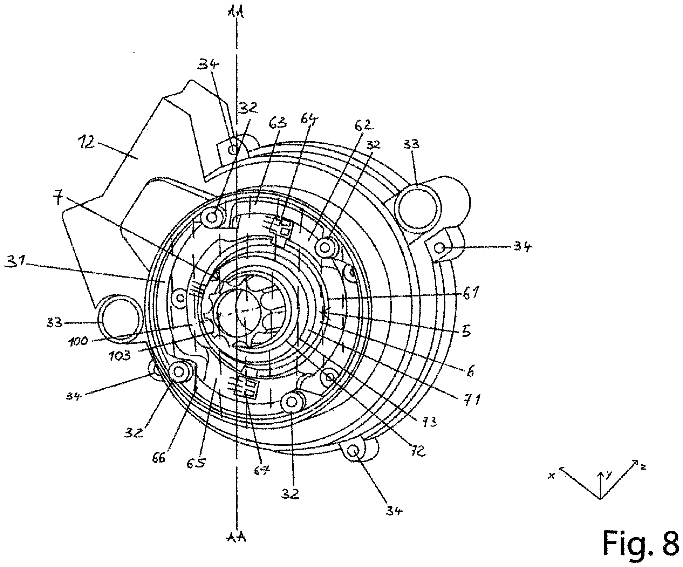

Fig. 8 shows a motor unit 1 with a motor housing 3 as shown in Fig. 5 with first fastening elements 33 and second fastening elements 34.

The first fastening elements 33 and the second fastening elements 34 are arranged on an outside of the motor housing 3. The first fastening elements 33 and the second fastening elements 34 are used to mount the motor housing 3 to a bike rail, which is not shown here.

The first two fastening elements 33 are arranged on opposite sides of the motor housing 3. One of the two first fastening elements is arranged next to the outside of a battery holder 12 of the motor housing 3.

The second fastening elements 34 are arranged in a rectangle shape. One of the four second fastening elements 34 is arranged next to the first fastening element 33, which is positioned on the opposite side of the first fastening element 33, which is next to the battery holder 12.

The first fastening elements 33 have a bigger diameter than the second fastening elements 34.

The battery holder 12 is also part of the motor housing 3.

The battery holder 12 is arranged on the perimeter of the motor housing 3 between both first fastening elements 33.

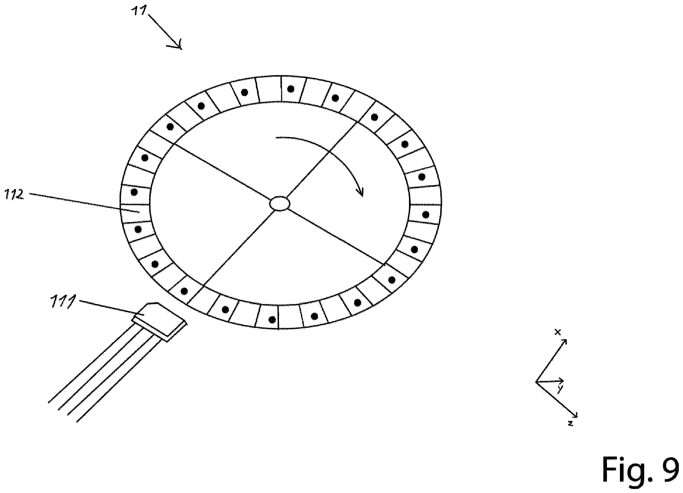

Fig. 9 shows the angular encoder 11 comprising a hall sensor 111 and a magnetic ring 112.

The magnetic ring comprises 72 north poles and 72 south poles. The north poles and the south poles are alternating on the magnetic ring 112. A change from one pole to the pole is equal to a 2,5° Degree change of position of the magnetic ring.

While the magnetic ring 112 is rotating and the hall sensor 111 is in a fixed position the poles are alternating. The hall sensor 111 measures a magnetic field. The hall sensor 111 detects the change of the magnetic field. So, each switch from south pole to north pole and the other way around is detected. The magnetic ring 122 is arranged to the spindle 10. Depending on the change of position of the magnetic ring 112 relative to the hall sensor 111 a change of position of the spindle 10 is detected.

In an embodiment the angular encoder is an on-axis magnetic encoder. A on-axis magnetic encoder uses a specially magnetized 2 pole neodymium magnet attached to the motor shaft. Because it can be fixed to the end of the shaft, it can work with motors that only have 1 shaft extending out of the motor body.

In a further embodiment a hull of the spindle 10 is comprising in a cross view a tooth shape. The hall sensor 111 can be arranged direct above the tooth shape. Due to rotating of the spindle 10 a hill and a valley of the tooth shape are alternating crossing the hall sensor 111. Changing from a hill to a valley and the other way around, the magnetic field changes.

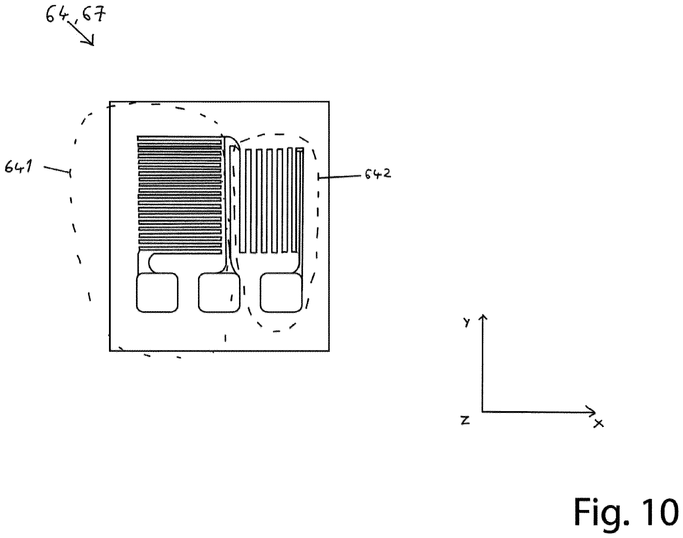

Fig. 10 shows the strain gauge 64, 67 as shown in Fig. 1.

The first strain gauge 64 and the second strain gauge 67 are designed as two-axis strain gauges. A two-axis strain gauge is measuring a change of length in one first direction with a second part 642 of the two-axis strain gauge 64, 67. The two-axis strain gauge is also measuring a change of length in a second direction, which is perpendicular to the first direction with a first part of the two-axis strain gauge 64, 67.

Just in case the first strain gauge 64 is used as shown in Fig. 1, only the first part 641 is used to measure a change of length of the first flap 62 between the support ring 61 and the first flap end 63.

Just in case the second strain gauge 67 is used as shown in Fig. 1, only the first part 642 is used to measure a change of length of the second flap 65 between the support ring 61 and the second flap end 66.

The first part 641 of the first strain gauge 64 and the first part 642 of the second strain gauge 67 are measuring a change of length in a y-direction, as shown in Fig. 10.

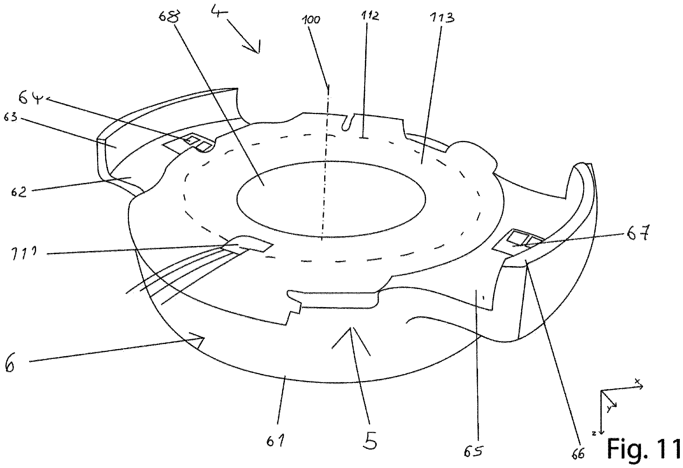

Fig. 11 shows the external force measurement unit 4 assembled with the hall sensor 111 of the angular detector 11 in a front view.

The magnetic ring 112 and the hall sensor 111 of the angular detector 11 are arranged on the front side, as shown in Fig. 6. The magnetic ring is arranged on the support ring 61 of the bearing support 6. The magnetic ring 112 is rotatably arranged. The hall sensor 111 is fixed. The hall sensor 111 is arranged to detect the change of the magnetic field from the magnetic ring 112.

A plastic cover 113 is covering the magnetic ring 112. The plastic cover 113 has a notch. The hall sensor 111 is arranged in the notch.

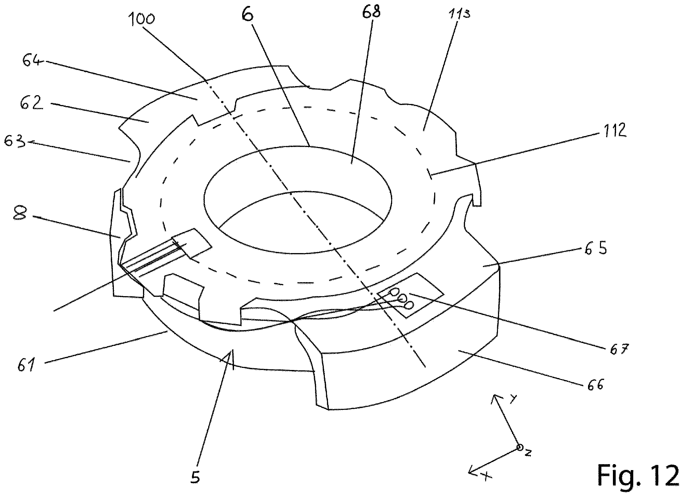

Fig. 12 shows the external force measurement unit 4 assembled with the hall sensor 111 of the angular detector 11 in a back view.

The magnetic ring 112 and the hall sensor 111 of the angular detector 11 are arranged on the backside, as shown in Fig. 7. Also, the first strain gauge 64 and the second strain gauge 67 are arranged on each backside of the flap 62, 65.

The evaluation unit 8 is attached to the load cell 5. The evaluation unit 8 is connected to the first strain gauge 64, the second strain gauge 67 and the hall sensor 111.

The magnetic ring 112 is arranged on a backside of the support ring 61. The hall sensor 111 is fixed. The hall sensor 111 is arranged to detect the change of the magnetic field from the magnetic ring 112.

A plastic cover 113 is covering the magnetic ring 112. The plastic cover 113 has a notch. The hall sensor 111 is arranged in the notch.

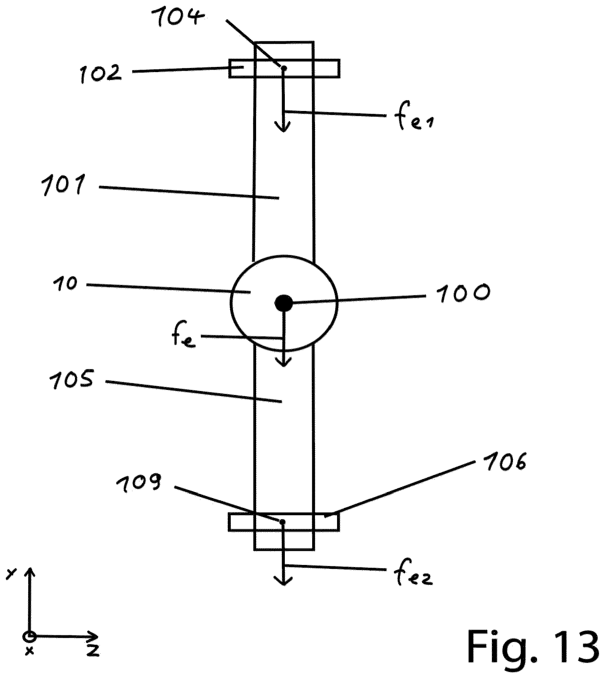

Fig. 13 shows schematically the spindle 10 with the pedals 102, 106 and the pedal cranks 101, 105 in a vertical position while a first external forces fₑ₁ act on the first pedal 102 and a second external force fₑ₂ act on the second pedal 106 in a side view. The load cell 5 with the first ball bearing 7 is not shown here.

In an embodiment the pedal cranks 101, 105 are in a vertical position. The vertical direction is along the y-axis. The first pedal 102 transfers the first external force fₑ₁ through the first pedal crank 101 to the spindle 10. The second pedal 106 transfers the second external force fₑ₂ through the second pedal crank 105 to the spindle 10.

The first external force fₑ₁ and the second external force fₑ₂ are part of the external force fₑ, which acts on the spindle 10. Each external force fₑ₁, fₑ₂ is acting in the same vertical direction.

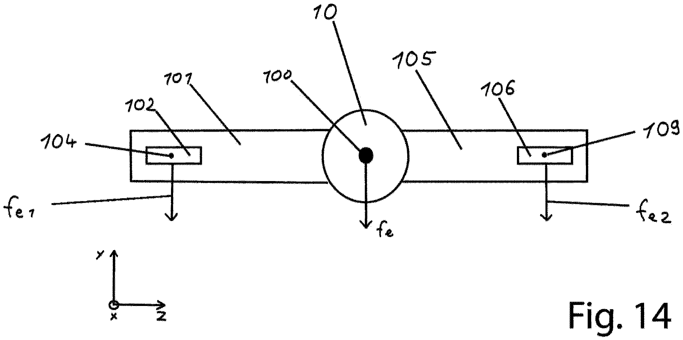

Fig. 14 shows schematically the spindle 10 with the pedals 102, 106 and the pedal cranks 101, 105 in a horizontal position in a side view. The load cell 5 with the first ball bearing 7 is not shown here.

In an embodiment the pedal cranks 101, 105 are in a horizontal position. The first external force fₑ₁ acts on the first pedal 102 and the second external force fₑ₂ acts on the second pedal 106. Each pedal transfers the external force fₑ₁ and fₑ₂ through each corresponding pedal crank 101, 105 to the spindle 10. Each external force fₑ is acting in the same vertical direction. The first external force fₑ₁ and the second external force fₑ₂ are part of the external force fₑ, which acts on the spindle 10. Each external force fₑ₁, fₑ₂ is acting in the same vertical direction.

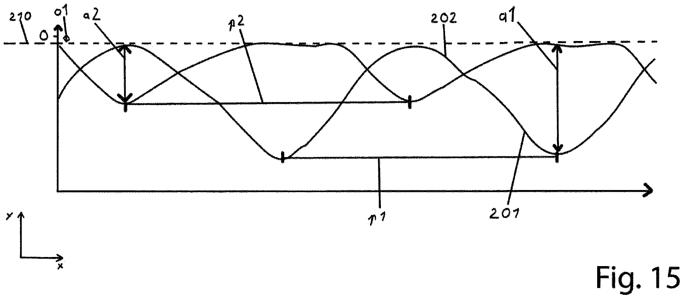

Fig. 15 shows in a graph typical signals with measured resistance of each strain gauge 54, 67 mapped to each pedal 102, 106.

The graph is a line diagram. On the y-axis is the resistance plotted and on the x-axis is the time plotted.

The first signal 201 shows a course of the resistances mapped to the first pedal 102. Two periods p1 of the first signal are plotted. The first signal has the first period p1 and a first amplitude a1. The first signal 201 is nearly a sinus function. The first signal is nearly shifted in the negative y-direction by one first amplitude a1.

The second signal 202 shows a course of the resistances mapped to the second pedal 106. Two periods p2 of the first signal are plotted. The second signal 202 has a second period p2 and a second amplitude a2. The second signal 202 is nearly a sinus function. The second signal is nearly shifted in the negative y-direction by one-second amplitude a2. The second signal 202 has at its maximum a plateau. The plateau has nearly half of the length of the second period p2.

The first signal 201 is shifted by nearly half a period p1, p2 to the second signal 202. The second amplitude a2 is nearly half of the first amplitude a1. The first period p1 and the second period p2 are nearly equal.

The maximums of each signal 201, 202 are arranged on the baseline 210. Additional to the shift in y-direction each signal 201, 202 has an offset o1. The offset o1 corresponds to a shift between the baseline 210 and the zero-point.

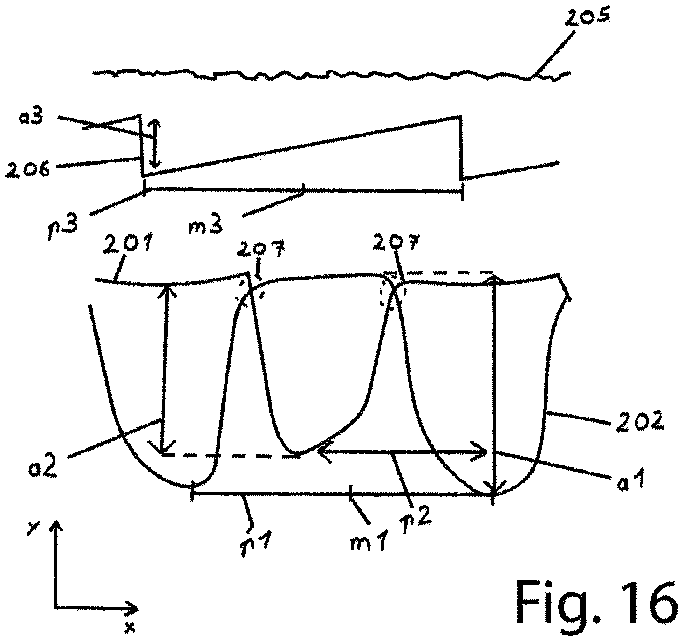

Fig. 16 shows in a graph typical signal of the resistances mapped to each pedal 102, 106 for a low cadence without motor support.

A hall sensor signal 205 shows the changing of the magnetic field measured with the angular detector 11, which is not shown here. Each change of the hall sensor signal 205 corresponds to a change of the magnetic field due to a change of the detected poles of the magnetic ring 112, which is not shown here.

A ramp function 206 shows the calculated relative position of the spindle 10. The ramp function 206 is calculated based on the hall sensor signal 205. A middle m3 of a ramp period p3 is arranged on nearly the same x-position as a middle m1 of the first period p1. Also, the minimum of the second signal 202 is nearly on the same x-position as the middle m1 of the first period p1.

Each signal 201, 201 has a plateau on its maximum. The maximum has nearly the size of half the first period p1. The first signal 201 is shifted to the second signal in the y-direction.

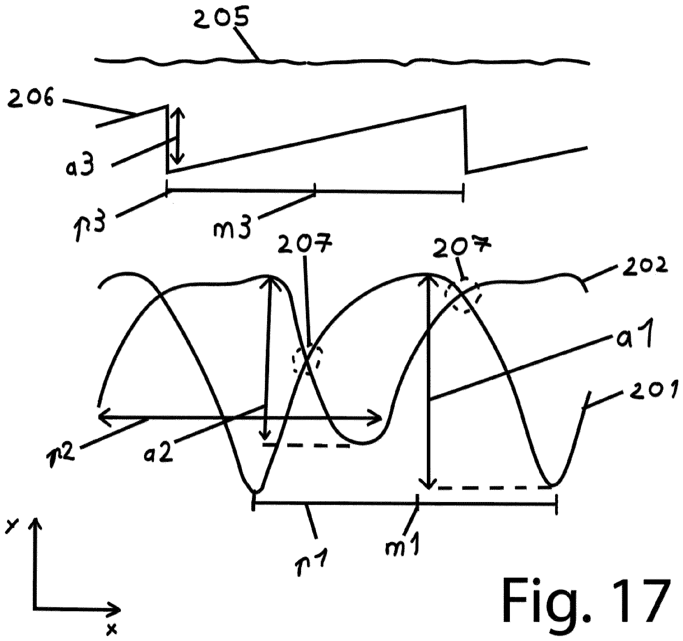

Fig. 17 shows in a graph typical signal of the resistances mapped to each pedal 102, 106 for a high cadence without motor support.

The course of the first period p1 and the second period p2 and their position relative to each of them is nearly the same as shown in Fig. 16. Compared to Fig. 16 the first signal 201 has a shorter plateau on its maximum point. It is nearly one-fourth of the period m1.

The middle m3 of the ramp period p3 of the ramp function 206 is shifted in negative x-direction relative to the middle m1 of the first period p1. The minimum of the second signal 202 is shifted to the middle m1 of the first period p1 by one-fourth of the first period.

The first signal 201 and the second signal 202 are more delayed relative to the ramp function 206 as shown in Fig. 16.

On each crossing point 207 of the first graph 201 and the second graph 202 a left pedal is on its highest y-position. The first pedal is the pedal, which is arranged on the left side of the spindle 10. The left side is the side, which is on the left side of the spindle 10, while the spindle 10 is moving a total moving direction.

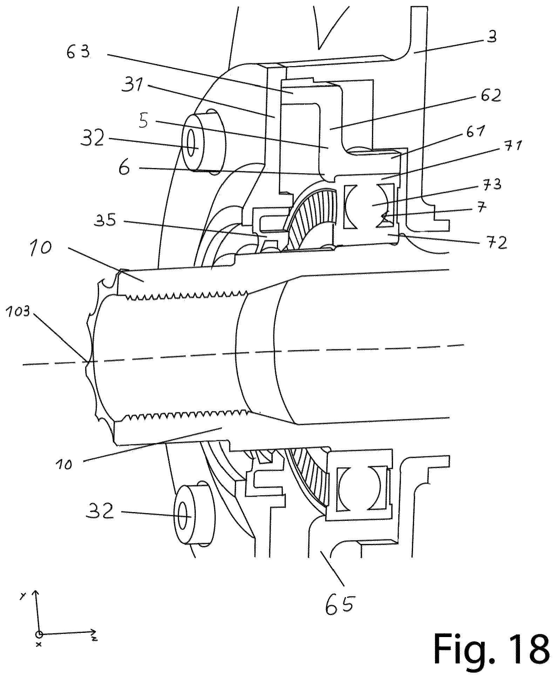

Fig. 18 shows a cross section view along the intersection line AA of the load cell 5 with the spindle 10 mounted in the motor housing 3 as shown in Fig. 8.

The motor housing 3 is cut along the intersection line AA as shown in Fig. 5 and 8.

The load cell 5 is arranged on the motor housing 3. Between each flap 62, 65 with each flap end 63, 66 and the motor housing 3 is a clearance in y-direction. In z- direction the load cell 5 is fixed with a holding plate 31. The holding plate 31 is fixed with screws 32. The holding plate 31 a hole. The spindle 10 fits through the hole. The hole comprises a sealing lip on its inner edge. The sealing slip protects the load cell against environmental influences.

As shown in Fig. 2 the external force fₑ acts on the first pedal 102. The external force fₑ is a force along the y-direction and acting mainly in negative y-direction. The first pedal crank 101 transfers the external force fₑ from the first pedal 102 through the first pedal spindle 104 to the first pedal crank 101. The first pedal 102 is rotatable around the first spindle symmetrical axis 104, as shown in Fig. 2. So, the first pedal 102 stays in a horizontal position.

The first pedal 101 crank is rotatable around the spindle symmetrical axis 100. The first pedal crank 101 is mounted to the first spindle end 103 to transfer the external force fₑ to the spindle 10.

The spindle 10 transfers the external force fₑ to the first bearing 7 and the second bearing 9. The first inner bearing ring 72 of the first bearing 7 takes up a first force f1, which is part of the external force fₑ. The second inner bearing 92 of the second bearing 9 takes up a second force f2, which is also part of the external force fₑ. The sum of the first force f₁ and the second force f₂ is equal to the external force fₑ. The first inner bearing ring 72 and the second inner bearing ring 92 transfer each force f₁, f₂ to each rolling roller 73, 93 of each bearing 7, 9. Each rolling roller 73, 93 arranges each inner bearing ring 72, 92 rotatable to each outer bearing ring 71, 91.

The support ring 61 takes up the first bearing 7. The first bearing 7 transfers the first force f₁ to the support ring 61. The support ring 61 transfers the first force f₁ to the first flap 63 and to the second flap 66.

The external force fₑ, the first force f₁, and the second force f₂ are vertical forces. Vertical forces are acting in the y-direction.

In an embodiment not shown here, the external force fₑ is acting on the second pedal 106. Like explained above, the second pedal 106 transfers the external force fₑ through the second pedal spindle 109 to the second pedal crank 105. The second pedal is rotatable around the second spindle 109 with the second spindle symmetrical axis 131, as shown in Fig. 2.

The second pedal crank 105 transfers the external force fₑ to the spindle 10 and is rotatable around the spindle symmetrical axis 100, as shown in Fig. 2. The second pedal crank 105 is mounted to the second end 107 of the spindle 10. The external force fₑ, which is transferred to the spindle is in the same way as explained above transferred through the first bearing 7, the second bearing 9, and the load cell 5 to the motor housing 3.

A chain 114, which is not shown here, transfers the horizontal forces fₓ₁, fₓ₂ to the deflector blade 110. The first horizontal force fₓ₁ pulls the deflector blade 110 in horizontal x-direction. The second horizontal force fₓ₂ pushes the deflector blade in horizontal x-direction.

The deflector blade 110 transfers the horizontal forces fₓ₁, fₓ₂ to the spindle 10. The spindle 10 also transfers the horizontal forces fₓ₁, fₓ₂ through the ball bearings 7, 9, as explained above, to each ball bearing seat. The horizontal forces fₓ₁, fₓ₂ are separate forces to the forces fₑ, f₁, f₂ and are not further considered here.

The second ball bearing 9 initiates the second force fₓ₂ to the motor housing 3.

Due to the initiated first force f₁ the first strain gauge 64 measures a change of length of the first flap 62. The second strain gauge 67 also measures a change of length of the second flap 65 depending on the first force f₁. Each Strain gauge 64, 67 changes its resistance due to the change of length.

An evaluation unit 8, shown in Fig.1 determines the resistance of each strain gauge 64, 67. Due to a predefined material expand coefficient the evaluation unit 8 calculates a force, which is measured with each strain gauge 64, 67, depending on the change of resistance of each strain gauge, 64, 67 and calculates the first force f₁.

The strain gauges 64, 67 are arranged to measure mainly the change of length in radial flap direction, as shown in Fig. 1.

As shown in Fig. 10 each strain gauge 64, 67 comprises a vertical strain gauge and a horizontal strain gauge. For measuring the change of length of each flap 62, 65 only the vertical part 641 of each strain gauge 64, 67 is used. The fist horizonal part of each strain gauge 64, 67 is used to measure a change of length due to a temperature change. This determined temperature change is used later to calculate a drift compensation.

Each strain gauge 64, 67 is part of a Half-bridge circuit. For example, a voltage of 36 Volt is connected to each outer end of the strain gauge. Due to a change of each resistances the relationship between the voltage drops in the first part 641 and the second part 642. Depending on this relationship a resistance of each part 641, 642 is calculated.

Further, each flap 62, 65 transfers the first force f₁ to each flap end 63, 66. The flap end 63, 66 transfers each part of the first force f₁ to the load cell seat of the motor housing 3, where the load cell 5 is taken up.

Additional to the first strain gauge 64 and the second strain gauge 67 the motor unit 1 also comprises the angular detector 11. The angular detector 11 is attached to the load cell 5 to detect a change of position of the spindle 10 relative to the spindle symmetrical axis 100. The hall sensor 111 of the angular detector 11 has a fixed position relative to the magnetic ring 112 and detects a change of the magnetic field from the magnetic ring 112, which is connected to the spindle 10. A change in position of the magnetic ring 112 indicates a change in position of the spindle 10. Further the magnetic ring 112 comprises a first marker and the spindle comprises a second marker. In case that, the angular encoder detects the absolute position, it is required to match the first marker with the second marker while assembly.

Depending on the change of position of the spindle 10 a relative position of the first pedal crank 101 is determined through the evaluation unit 8. Depending on a position calibration of the spindle 10 the absolute position of the spindle 10 is determined. Due to the absolute position of the spindle 10, an absolute position of the first pedal crank 101 is determined. Depending on the absolute position of the first pedal crank 101 a position of the pedal 102 relative to the spindle 10 is calculated.

Considering that, the external force fₑ is acting to the pedal 102 mainly when the first pedal 102 is more in positive x-direction than the spindle 10, it is determined on which pedal the external force fₑ is acting on.

Depending on a refined ratio of the first force f₁ and the second force f₂ the evaluation unit 8 determines the external force fₑ.

The external force fe is applied in an alternating manner between each pedal 102, 106. The force fe is mainly applied to the pedal 102, 106, which is moving downwards in the negative y-direction.

In an embodiment, as shown in Fig. 13 is a first external force fe1 acting on the first pedal 102 and a second force fe 2 acting on the second pedal 106. The external force fe1, fe2, which is applied to the pedal 102, 106, which is moving downwards is bigger than the force on the other pedal 102, 106. For example, if the first pedal 102 is going downwards the first external force fe1 is bigger than the second external force fe2.

As shown in Fig. 13 the first pedal 104 is relative to the y-position in a higher position than the second pedal 106. Therefore, the first external force fe1 is bigger than the second external force fe2. Even in this position, the second external force fe2 has a contribution to the total external force fe, which is acting on the spindle 10.

Due to the fact, that a person who is initiating the external forces fe1, fe2 needs to keep its balance the second external force fe2 is larger than zero.

In an embodiment as shown in Fig. 14 the pedals 102, 106 are nearly on equal height relative to the y-position. In this case, the external force fe1, fe2, which is acting in a pedal direction is bigger. For example, if the pedals are rotating counterclockwise around the spindle symmetrical axis 100 the first external force is bigger than the second external force fe2. Due to the fact, that the person who is imitating the first external force fe2 must keep its balance the second external force fe2 is bigger than zero, as explained above.

Fig. 15 shows a line graph with two lines. The first graph 201 shows the resistance of the second strain gauge 65. The first graph 201 has several minimums and maximums. At each minimum of the first graph 201, the first force fₑ₁ starts acting on the first pedal 102. While the first pedal 102 is going downwards the resistance is changing from its maximum to its minimum. With each repeat of the rotation of the first pedal 102 the first graph 201 is repeating.

As explained above the second graph 202 shows the resistance of the first strain gauge 62. On each minimum, the second pedal 106 is in its lowest x-position.

A change of each graph 201, 202 is equal to a half-turn of the pedals 102, 106 around the spindle symmetrical axis 100, as shown in Fig. 2

Due to the fact, that always a small external force fₑ, for example, the weight force, is acting on the spindle 10 each graph 201, 202 have an offset o1 between the baseline 210 and the zero point.

Due to a ball bearing clearance of the first bearing 7 the change of resistance of one strain gauge 62, 64 is delayed to the change of resistance of the other strain gauge 62, 64. Therefore the maximum of one graph 201, 202, and the minimum of the other graph 201, 202 have not the same x-position. Graphs 201, 202 are delayed to each. Also, between the first flap with its first flap end, which are not shown here, and the load cell carrier seat, which is also not shown here, is a clearance. Due to these clearances the maximum of the second graph 202 has a plateau.

Considering the offset o1 and the delay the evaluation unit 8 determines a zero-point calibration, which is applied to the determined first force f1. Depending on this the external force fe is calculated.

As shown in Fig. 16 and 17 the hall sensor signal 205 is used to calculate the ramp function 206. The ramp function 206 is calculated by summing up each absolute value of the hall sensor signal 205 and counting the number of signals. After one turn of the spindle 10 the hall sensor signal changes the ramp function 206 is set to zero. This repeats for each turn.

Fig. 16 shows the graphs at a low cadence while Fig. 17 is showing the graphs at a high cadence. Comparing both figures the ramp function is shifted in the graph showing the high cadence is shifted more in negative x-direction than in Fig. 16 relative to the first graph 201 and the second graph 202. This means the relationship between the ramp function 206 and graphs 201, 202 is depending on the cadence. When the spindle 10 has a high cadence, a centrifugal force is acting on the spindle 10. The centrifugal force is also measured with each strain gauge 64, 67. Therefore the centrifugal force is also part of the determined first force f1 but is not part of the external force fe. Determining the real external force means to compensate the centrifugal force. This is done by the evaluation unit 8.

In an embodiment, evaluation unit 8 takes the ramp function 206 and the graphs 201, 202 into account and calculates the absolute pedal position. With the knowledge, that at each minimum of each graph 201 the first pedal 102 is in its lowest position the ramp function is calibrated to this position. In the same way the calibration for the second graph 202 and the second pedal 106 works.

In a further embodiment, the evaluation unit 8 smooths the measured resistances of the first strain gauge 64 and the second strain gauge 67. The smoothing is done with a low pass filter. A signal from each strain gauge 62, 66 passes the low pass filter. If the frequency is lower than a selected cut-off frequency the signal passes the low pass filter.

If the frequency of the signal is higher than the selected cut-off frequency the low pass filter attenuates the frequencies with a higher frequency than the cut-off frequency. The exact frequency response of the filter depends on the filter design. Measurement errors of the resistances are fitted in this way.

In a further embodiment, the evaluation unit 8 applies a levelling to the measured resistance of each strain gauge 64, 67. The levelling compensates for an error of measurement corresponding to a heating of the strain gauges 64, 67. If the strain gauges 64, 67 are getting warm the relation between the resistance and the change of length changes. This means the predefined relation between resistance and the change of length is inaccurate.

Thus, evaluation unit 8 calculates a levelling compensation and applies this compensation to the measured resistance. This levelling compensation is an offset, which is applied to each strain gauge 64, 67. The levelling compensation is applied to the measured values of each resistance of the strain gauges 64, 67 after a predefined span.

In a further embodiment, depending on the absolute position of the pedal cranks 101, 105 and the external force fₑ a torque is determined. Depending on the position of the pedals 102, 106 the position of the pedal cranks 101, 105 and within the position of the spindle 10 an effective lever arm length of the pedal is calculated.

A lever arm length of the pedal crank 101, 106 is predefined and saved to the evaluation unit 8. When the position of the pedal 102, 106 changes also a vertical distance between pedal 102, 106 along with the pedal crank 101, 105 and the spindle symmetrical axis 100 changes. The effective lever arm length is equal to the distance between the pedal 102, 106, and the spindle symmetrical axis 100. Taking the effective lever arm length into account the evaluation unit 8 determines depending on the calculated external force fₑ the torque.

Fig. 19 shows a schematically section view of the motor unit 1 with the electric motor 2 and a freewheel 108.

The motor unit 1 comprises the motor housing 3. The motor housing 3 comprises a third fastening element 342to mount the motor housing 3 to a frame, which is not shown here. The motor housing 3 comprises three motor housing parts 343, 344, 345. A first motor housing part 343 comprises at least a gear housing and an external toothing. A second housing part 344 comprises at least the load cell 5. The third motor housing part 345 comprises at least an output to a chain ring.

The motor housing 3 takes up a spindle 10. At one end of the spindle 10 the first bearing 7 takes up the spindle 10. The first bearing is taken up by the first bearing support 6. The first bearing support 6 is part of the load cell 5. The load cell 5 is adapted to determine a torque, as described above. The third bearing 360 takes up another end of the spindle 10. The spindle 10 has a spindle symmetry axis 100. In particular, the spindle 10 and the electric motor 2 rotate around the spindle symmetry axis 100. In an embodiment the motor unit 1 comprises one spindle 10, in particular not more than one spindle 10 and at least not less than one spindle 10.

Further, the electric motor 2 is arranged inside the motor housing 3 of the motor unit 1. The electric motor 2 can be DC-motor or an AC-motor. In particular, the electric motor 2 can be a brushed DC motor, an electronic commutator motor or a universal AC/DC motor. The electric motor 2 can be an induction motor or a synchronous motor. In particular, the electric motor 2 can be a rotary motor or a linear motor.

A stator of the electric motor 2 is arranged on an outside of the rotor. The electric motor 2 can be an inrunner motor. The stator comprises windings.

The windings are wires that are arranged in coils. The wires can be made of soft iron magnetic material. Magnets of the electric motor 2 are arranged between the windings and the rotor 330. In particular, the magnets are mounted to the rotor.

A transmitter bearing 310 takes up the rotor 330. The transmitter bearing 310 can be a roller bearing, in particular a rolling roller bearing or a ball bearing. A type of the transmitter bearing 310 is not limited to a specific bearing type. The transmitter bearing 310 transfers power from the rotor to a pin-ring 311. Especially, the transmitter bearing 310 ensures that the rotor 330 can rotate with respect to the motor housing 3, while radial forces are transferred to effect rotation of a pin ring 311 described further below.

The transmitter bearing 310 is part of a harmonic pin ring gear system that has at least one inner ring 312 with inner teeth and at least one outer ring 313 with outer teeth, and a pin ring 311 with pins that have a circular cross-section and a rotor 330 with a transmitter bearing 310 for pushing the pins of said pin ring 311 into the teeth of said outer ring 313 and into the teeth of said inner ring 312. The transmitter bearing 310 deforms the pin ring 311 in such a way that the outer ring 313 and the inner ring 312 rotate relative to each other. The inner ring 312 is called inner ring because it has inner teeth, and the outer ring 313 is called outer ring because it has outer teeth, despite the fact that the inner ring 312 is arranged radially outside the outer ring 313.

The outer ring 313 is mounted to an outer bearing 320. The outer ring 313 transfers the power to a sprocket carrier 340. The sprocket carrier 340 can be mounted to a chain ring, which is not shown here.

The sprocket carrier 340 is mounted through the free wheel 108 to the spindle 10. In particular, the motor unit 1 comprises only one freewheel 108. In other words, the motor unit 1 comprises exact one free wheel 108 and/or at least not more than one free wheel 108.

In case the electric motor 2 provides a first torque, which is higher than a second torque, which is applied to the spindle 10 through the pedal cranks 101, 105, the electric motor 2 amplifies the second torque. The first torque and the second torque sum up to a third torque. The third torque is outputted through the sprocket carrier to the chain ring, which is not shown here. The chain ring transfers the third torque through the chain 114 for example to a wheel of a bicycle.

The free wheel 108 allows the spindle 10 to rotate in an opposite direction compared with the sprocket carrier 340. Thus, a driver can freely move pedals in a backwards direction.

In case the speed of the bike is greater than a threshold speed, the electric motor 2 can stop to amplify the second torque. In this case the electric motor 2 will also be decoupled from the spindle 10. This means the second torque can be equal to the third torque.

In a further embodiment that is not shown in the figures, but corresponds largely to that shown in Fig. 19, there is a single freewheeling device between the outer ring 313 and the sprocket carrier 340. This freewheeling device can allow the sprocket carrier 340 to rotate faster than the outer ring 313. The sprocket carrier 340 may be fixedly connected to the spindle 10. In case the spindle 10 is moved backwards, the motor 3 rotates in the same rotational direction as the spindle 10. The freewheeling device allows a driver to manually rotate the spindle 10 faster than the outer ring 313. With such an embodiment, an evaluation unit being configured to detect rotation of the spindle and/or a force or torque applied to the spindle and rotation of the electric motor, and to energize the electric motor to drive in a direction against the drive direction if the spindle rotates against the drive direction, especially as described above, can be preferably used.

In the above-mentioned description, the first torque can be also understood as a first rotation speed, the second torque as a second rotation speed and the third torque as a third rotation speed.

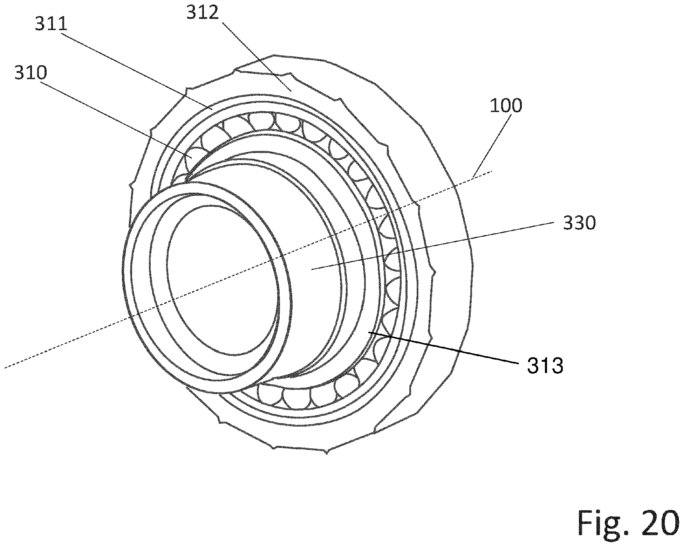

Fig. 20 shows a schematically front side view of a transmitter bearing 310 with an outer ring 313, a pin-ring 311 and an inner ring 312.

The inner ring 312 comprises on an outside of the inner ring 312 an elevation. The elevation is arranged on the circumference of the outside of the inner ring 312, in particular the inner ring 312 can comprise a plurality of elevations. The elevations can be arranged uniformly on the outside of the inner ring 312. On one side of the outer ring along the spindle symmetrical axis 100, the outer ring comprises a bearing, which is not shown here.

The inner ring 312 comprises teeth on an inside of the inner ring 312. The teeth are uniformly arranged along a circumference of the inside of the inner ring 312.

The teeth of the inner ring 312 interlock to the pin-ring 311. The pin-ring comprises teeth on an outside of the pin-ring 311. The teeth on the outside of the pin-ring 311 interlock with the teeth on the inside of the inner ring 312. The pin-ring also comprises teeth on an inside of the pin-ring 311. The teeth on the inside of the pin-ring 311 interlock with teeth on an outside of the outer ring 313.

In particular, the pin ring 311 can be oval. The number of teeth on the inside of the outer ring 311 and the number of teeth on the outside of the outer ring 313 can differ. In other words, the gear ratio depends on a ratio of the number of teeth of the outer ring to the number of teeth on the inner ring.

The pin-ring comprises, as described above on the outer side teeth, which extend over the wide, in particular of the hole wide of the pin-ring 311. On the inside of the pin-ring 311 the teeth extend along a part of the wide of the pin-ring 311.

The other part of the inside of the pin-ring 311 has a nearly flat surface. The flat surface is fitted to an outside of the transmitter bearing 310. The fit can be a press fit.

Bearing elements are arranged between an outer ring of the transmitter bearing 310 and an inner ring of the transmitter bearing 310. The bearing elements can comprise a cylindric shape or a spherical shape. The inner ring of the transmitter bearing 310 is adapted to take up the spindle 10.

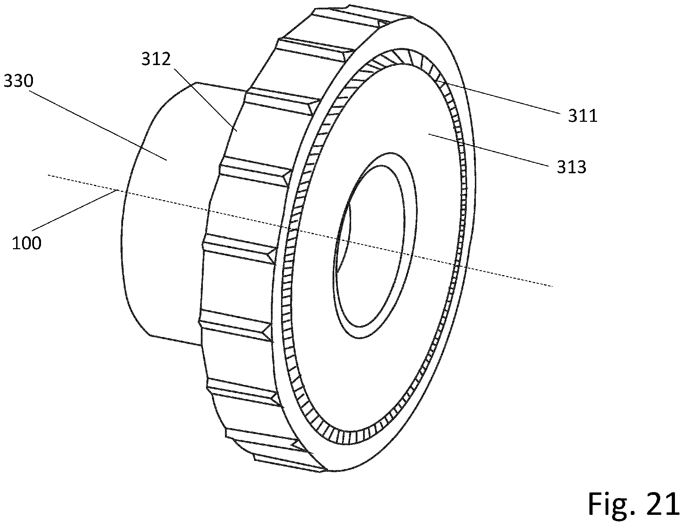

Fig. 21 shows a schematically back side view of the transmitter bearing 310 as shown in Fig. 20.

On the averted side, the inner ring 312 takes up the pin ring 311. The pin ring 311 also takes up an outer ring 313.

The inner ring 312 takes up the pin ring 311. The pin ring 311 is mounted on the transmitter bearing 310. The transmitter bearing 310 takes up the rotor 330 of the electric motor 2. The inner ring 312, the pin ring 311 and the transmitter bearing have a common spindle symmetry axis 100.

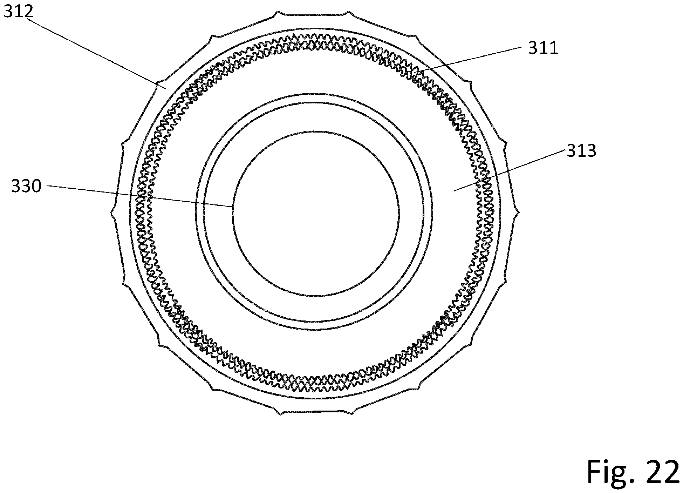

Fig. 22 shows a schematically back view of the transmitter bearing 310 as shown in Fig. 20.

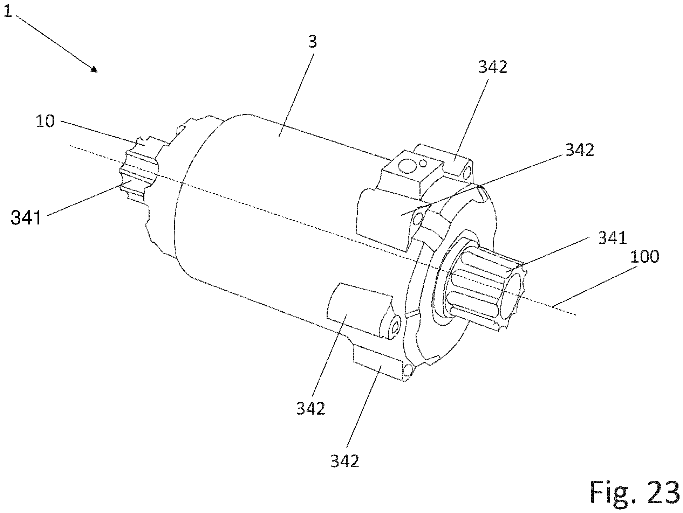

Fig. 23 shows a perspective back side view of the motor unit 1.

The motor unit 1 comprises a motor housing 3. The motor housing 3 can comprise a round shape, an oval shape or a rectangle shape. In particular, the motor housing 3 can be like a cylinder. On a top side or on a bottom side of the cylinder the housing can comprise openings. The openings can take up the spindle 10 with the spindle symmetrical axis 100. In particular, the openings can be a passing for the spindle 10. The spindle 10 can be taken up by the motor housing 3 that only the ends of the spindle, in particular the bottom brackets 341 protrude on each side.

Further the motor housing 3 comprises on a cylindric outer surface housing fastening elements 342. The housing fastening elements can be adapted to mount the motor unit 1, in particular the motor housing 3, to a frame, which is not shown here.

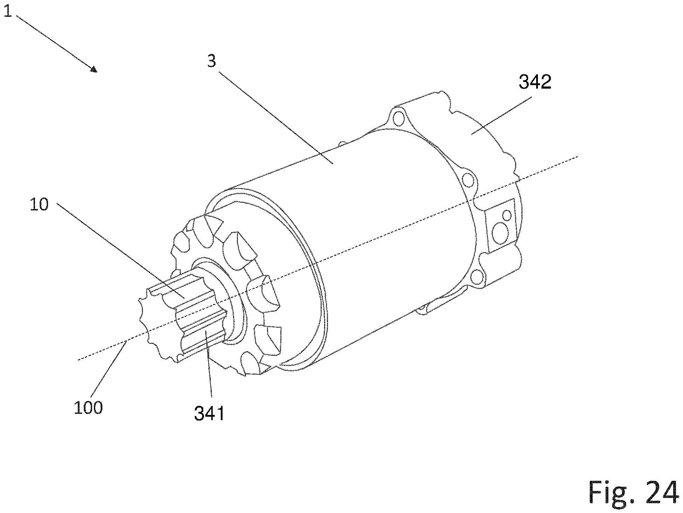

Fig. 24 shows a perspective front side view of the motor unit 1, as shown in Fig. 23.

### List of reference numerals

- 1: Motor unit
- 2: Electric motor
- 3: Motor housing
- 4: External force measurement unit
- 5: Load cell
- 6: First bearing support
- 7: First bearing
- 8: Evaluation unit
- 9: Second bearing
- 10: Spindle
- 11: Angular encoder
- 12: Battery holder
- 31: Holding plate
- 32: Screw
- 33: First fastening element
- 34: Second fastening element
- 35: Sealing lip
- 61: Support ring
- 62: First flap
- 63: First flap end
- 64: First strain gauge
- 65: Second flap
- 66: Second flap end
- 67: Second strain gauge
- 68: First bearing seat
- 69: Mechanical guiding
- 71: First outer ring
- 72: First inner ring
- 73: First bearing element
- 91: Second outer ring
- 92: Second inner ring
- 93: Second bearing elements
- 100: Spindle symmetry axis
- 101: First crank
- 102: First pedal
- 103: First end
- 104: First symmetry axis
- 105: Second crank
- 106: Second pedal
- 107: Second end
- 108: Free wheel
- 109: Second symmetry axis
- 110: Deflector blade
- 111: Hall sensor
- 112: Magnetic ring
- 113: Plastic cover
- 114: Chain
- 130: First pedal spindle
- 131: Second pedal spindle
- 201: First graph
- 202: Second graph
- 205: Hall sensor signal
- 206: Ramp function
- 207: Cross point
- 210: Baseline
- 300: Magnet
- 310: Transmitter bearing
- 311: Pin-ring
- 312: inner ring
- 313: outer ring
- 320: outer bearing
- 330: Rotor
- 340: Sprocket carrier
- 341: Bottom bracket
- 342: Housing fastening elements
- 343: First motor housing part
- 344: Second motor housing part
- 345: Third motor housing part
- 360: Third bearing
- 641: First part of a stain gauge
- 642: Second part of a stain gauge
- fe: External force gauge
- f1: First force
- f2: Second force
- o1: Offset
- p1: First period
- p2: Second period
- m1: Center of a first period
- m3: Center of a third period
- a1: First amplitude
- a2: Second amplitude
- a3: Third amplitude
- fx1: First horizontal force
- fx2: Second horizontal force
- fe1: First external force
- fe2: Second external force

## Claims

1. Motor unit (1) for an electric bicycle, the motor unit comprising
- an electric motor (2), being configured to drive a driving element,
- a spindle (10) being connectable to pedals,
- a sprocket carrier (340), that is drivable in a drive direction by the driving element and by the spindle (10), and
- an evaluation unit (8) being configured to detect rotation of the spindle (10) and/or a force or torque applied to the spindle (10) and rotation of the electric motor (2), and to energize the electric motor (2) to drive in a direction against the drive direction if the spindle (10) rotates against the drive direction,
- wherein the motor unit (1) comprises only one single freewheeling device in the torque flow between the electric motor (2) and the spindle (10),
- wherein the spindle (10) is connected to the sprocket carrier (340) such that the spindle (10) and the sprocket carrier (340) have a fixed rotational relationship, and
- wherein the one single freewheeling device is arranged between the driving element and the sprocket carrier (340),
- **characterized in that** the evaluation unit (8) is configured to energize the electric motor (2) against the drive direction so that the pedals remain engaged with the feet of a driver.

2. Motor unit (1) according to claim 1,
- wherein the freewheeling device allows faster rotation of the sprocket carrier (340) with respect to the driving element.

3. Motor unit (1) according to one of the preceding claims,
- wherein the evaluation unit (8) is configured to energize the electric motor (2) to compensate for a drag moment of the electric motor (2) when rotating against the drive direction.

4. Motor unit (1) according to one of the preceding claims,
- the motor unit (1) further comprising an external force measurement unit (4), and
- the evaluation unit (8) being configured to measure the force or torque applied on the spindle (10) using the external force measurement unit (4).

5. Motor unit (1) according to claim 4,
wherein the external force measurement unit (4) comprises
- a load cell (5) with a support ring (61),
- wherein a first flap (62) and a second flap (65) are arranged on the support ring (61), wherein the second flap (65) is arranged opposite to the first flap (62) on the support ring (61),
- wherein each flap (62, 65) is arranged in a radial direction to the outside of the support ring (61),
- and a first flap end (63) and a second flap end (66) being arranged at respective ends of the first flap (62) and the second flap (65),
- a first strain gauge (64), which is arranged on the first flap (62) and a second strain gauge (67), which is arranged on the second flap (65), wherein depending on a change of length of the first flap (62) or the second flap (65) due to a material expanding the first strain gauge (64) and/or the second strain gauge (67) is adapted to change their respective resistance.

6. Motor unit (1) according to claim 5,
- further comprising a motor housing (3), wherein the first flap end (63) and the second flap end (66) are adapted to mount the load cell (5) to a load cell carrier seat on the motor housing (3) of the motor unit (1), and a second outer ring (91) is mounted to a second rolling support of the motor housing (3).

7. Motor unit (1) according to one of the preceding claims,
- further comprising an angular encoder (11) to determine a radial position of the spindle (10),
- wherein the evaluation unit (8) is configured to determine the rotation of the spindle (10) using the angular encoder (11).

8. Motor unit (1) according to one of the preceding claims,
- wherein the evaluation unit (8) is configured to deenergize the electric motor (2)
- either partly or completely, depending on a relationship of rotational speed, force, and/or torque between the driving element and the spindle (10).

9. Motor unit (1) according to one of the preceding claims,
- wherein the evaluation unit (8) is configured to measure and/or control a current applied to the electric motor (2).

10. Motor unit (1) according to claim 9,
- wherein the evaluation unit (8) is configured to determine the rotation of the motor (2) based on the measured current.

11. Motor unit (1) according to one of the preceding claims,
- wherein the motor unit (1) comprises a sprocket wheel that is in a fixed rotational relationship with the sprocket carrier (340), the sprocket wheel being adapted to drive a chain.

12. Motor unit (1) according to one of the preceding claims,
- the motor unit (1) further comprising a gear that provides for a fixed rotational relationship with a transmission ratio between the electric motor (2) and the driving element.

13. Motor unit (1) according to claim 12,
- wherein the gear is a pin-ring-gear.

14. Electrically assisted bicycle, comprising a motor unit (1) according to one of the preceding claims.

## Patentansprüche

1. Motoreinheit (1) für ein elektrisches Fahrrad, wobei die Motoreinheit aufweist:
- einen Elektromotor (2), der zum Antreiben eines Antriebselements ausgebildet ist,
- eine Spindel (10), die mit Pedalen verbindbar ist,
- einen Kettenradträger (340), der von dem Antriebselement und von der Spindel (10) in einer Antriebsrichtung antreibbar ist, und
- eine Auswerteeinheit (8), die dazu ausgebildet ist, eine Drehung der Spindel (10) und/oder eine auf die Spindel (10) ausgeübte Kraft oder ein auf die Spindel (10) ausgeübtes Drehmoment und eine Drehung des Elektromotors (2) zu erfassen und den Elektromotor (2) zum Antrieb in einer Richtung entgegen der Antriebsrichtung zu erregen, wenn sich die Spindel (10) entgegen der Antriebsrichtung dreht,
- wobei die Motoreinheit (1) nur eine einzige Freilaufeinrichtung im Drehmomentfluss zwischen dem Elektromotor (2) und der Spindel (10) aufweist,
- wobei die Spindel (10) mit dem Kettenradträger (340) so verbunden ist, dass die Spindel (10) und der Kettenradträger (340) eine feste Drehbeziehung besitzen, und
- wobei die eine einzige Freilaufeinrichtung zwischen dem Antriebselement und dem Kettenradträger (340) angeordnet ist,
- **dadurch gekennzeichnet, dass** die Auswerteeinheit (8) ausgebildet ist, den Elektromotor (2) entgegen der Antriebsrichtung zu erregen, so dass die Pedale mit den Füßen eines Fahrers in Kontakt bleiben.

2. Motoreinheit (1) nach Anspruch 1,
- wobei die Freilaufeinrichtung eine schnellere Drehung des Kettenradträgers (340) in Bezug auf das Antriebselement ermöglicht.

3. Motoreinheit (1) nach einem der vorhergehenden Ansprüche,
- wobei die Auswerteeinheit (8) ausgebildet ist, den Elektromotor (2) zur Kompensation eines Schleppmoments des Elektromotors (2) bei einer Drehung entgegen der Antriebsrichtung zu erregen.

4. Motoreinheit (1) nach einem der vorhergehenden Ansprüche,
- wobei die Motoreinheit (1) zudem eine externe Kraft-Messeinheit (4) aufweist, und
- wobei die Auswerteeinheit (8) zur Messung der auf die Spindel (10) ausgeübten Kraft oder des ausgeübten Drehmoments mittels der externen Kraft-Messeinheit (4) ausgebildet ist.

5. Motoreinheit (1) nach Anspruch 4,
wobei die externe Kraft-Messeinheit (4) aufweist:
- eine Kraftmessdose (5) mit einem Stützring (61),
- wobei eine erste Lasche (62) und eine zweite Lasche (65) auf dem Stützring (61) angeordnet sind, wobei die zweite Lasche (65) gegenüber der ersten Lasche (62) auf dem Stützring (61) angeordnet ist,
- wobei jede Lasche (62, 65) in radialer Richtung zu der Außenseite des Stützrings (61) angeordnet ist,
- und ein erstes Laschenende (63) und ein zweites Laschenende (66) an jeweiligen Enden der ersten Lasche (62) und der zweiten Lasche (65) angeordnet sind,
- einen ersten Dehnungsmessstreifen (64), der auf der ersten Lasche (62) angeordnet ist, und einen zweiten Dehnungsmessstreifen (67), der auf der zweiten Lasche (65) angeordnet ist, wobei der erste Dehnungsmessstreifen (64) und/oder der zweite Dehnungsmessstreifen (67) ausgebildet ist, in Abhängigkeit von einer Längenänderung der ersten Lasche (62) oder der zweiten Lasche (65) aufgrund einer Materialausdehnung seinen jeweiligen Widerstand zu ändern.

6. Motoreinheit (1) nach Anspruch 5,
- zudem aufweisend ein Motorgehäuse (3), wobei das erste Laschenende (63) und das zweite Laschenende (66) dazu ausgebildet sind, die Kraftmessdose (5) an einem Kraftmessdosenträgersitz an dem Motorgehäuse (3) der Motoreinheit (1) zu befestigen, und ein zweiter Außenring (91) an einem zweiten Rollträger des Motorgehäuses (3) befestigt ist.

7. Motoreinheit (1) nach einem der vorhergehenden Ansprüche,
- zudem aufweisend einen Winkelgeber (11) zum Ermitteln einer radialen Position der Spindel (10),
- wobei die Auswerteeinheit (8) dazu ausgebildet ist, die Drehung der Spindel (10) mittels des Winkelgebers (11) zu ermitteln.

8. Motoreinheit (1) nach einem der vorhergehenden Ansprüche,
- wobei die Auswerteeinheit (8) dazu ausgebildet ist, den Elektromotor (2) in Abhängigkeit von einem Drehzahl-, Kraft- und/oder Drehmomentverhältnis zwischen dem Antriebselement und der Spindel (10) entweder teilweise oder vollständig stromlos zu schalten.

9. Motoreinheit (1) nach einem der vorhergehenden Ansprüche,
- wobei die Auswerteeinheit (8) zum Messen und/oder Steuern eines an den Elektromotor (2) angelegten Stroms ausgebildet ist.

10. Motoreinheit (1) nach Anspruch 9,
- wobei die Auswerteeinheit (8) dazu ausgebildet ist, basierend auf dem gemessenen Strom die Drehung des Motors (2) zu ermitteln.

11. Motoreinheit (1) nach einem der vorhergehenden Ansprüche,
- wobei die Motoreinheit (1) ein Kettenrad aufweist, das in einer festen Drehbeziehung mit dem Kettenradträger (340) steht, wobei das Kettenrad zum Antreiben einer Kette ausgebildet ist.

12. Motoreinheit (1) nach einem der vorhergehenden Ansprüche,
- wobei die Motoreinheit (1) zudem ein Getriebe aufweist, das eine feste Drehbeziehung mit einem Übersetzungsverhältnis zwischen dem Elektromotor (2) und dem Antriebselement bereitstellt.

13. Motoreinheit (1) nach Anspruch 12,
- wobei das Getriebe ein Pin-Ring-Getriebe ist.

14. Elektrisch unterstütztes Fahrrad, aufweisend eine Motoreinheit (1) nach einem der vorhergehenden Ansprüche.

## Revendications

1. Unité de motorisation (1) pour une bicyclette électrique, l'unité de motorisation comprenant
- un moteur électrique (2), configuré pour entraîner un élément d'entraînement,
- une broche (10) pouvant être reliée à des pédales,
- un support de roue dentée (340), qui peut être entraîné dans une direction d'entraînement par l'élément d'entraînement et par la broche (10), et
- une unité d'évaluation (8) configurée pour détecter une rotation de la broche (10) et/ou une force ou un couple appliqué à la broche (10) et une rotation du moteur électrique (2), et pour alimenter le moteur électrique (2) afin de l'entraîner dans une direction opposée à la direction d'entraînement si la broche (10) tourne dans la direction opposée à la direction d'entraînement,
- l'unité de motorisation (1) ne comprenant qu'un seul dispositif de roue libre dans le flux de couple entre le moteur électrique (2) et la broche (10),
- dans laquelle la broche (10) est reliée au support de roue dentée (340) de sorte que la broche (10) et le support de roue dentée (340) ont une relation de rotation fixe, et
- dans laquelle le seul dispositif de roue libre est disposé entre l'élément d'entraînement et le support de roue dentée (340),
- **caractérisée en ce que** l'unité d'évaluation (8) est configurée pour alimenter le moteur électrique (2) dans la direction opposée à la direction d'entraînement, de sorte que les pédales restent en contact avec les pieds d'un conducteur.

2. Unité de motorisation (1) selon la revendication 1,
- dans laquelle le dispositif de roue libre permet une rotation plus rapide du support de roue dentée (340) par rapport à l'élément d'entraînement.

3. Unité de motorisation (1) selon l'une des revendications précédentes,
- dans laquelle l'unité d'évaluation (8) est configurée pour alimenter le moteur électrique (2) afin de compenser un moment de traînée du moteur électrique (2) lorsqu'il tourne dans la direction opposée à la direction d'entraînement.

4. Unité de motorisation (1) selon l'une des revendications précédentes,
- l'unité de motorisation (1) comprenant en outre une unité de mesure de force externe (4), et
- l'unité d'évaluation (8) étant configurée pour mesurer la force ou le couple appliqué à la broche (10) à l'aide de l'unité de mesure de force externe (4).

5. Unité de motorisation (1) selon la revendication 4,
dans laquelle l'unité de mesure de force externe (4) comprend
- une cellule de charge (5) avec une bague de support (61),
- dans laquelle une première bride (62) et une seconde bride (65) sont disposées sur la bague de support (61), la seconde bride (65) étant disposée à l'opposé de la première bride (62) sur la bague de support (61),
- dans laquelle chaque bride (62, 65) est disposée dans une direction radiale vers l'extérieur de la bague de support (61),
- et une première extrémité de bride (63) et une seconde extrémité de bride (66) sont disposées à des extrémités respectives de la première bride (62) et de la seconde bride (65),
- une première jauge de contrainte (64), disposée sur la première bride (62) et une seconde jauge de contrainte (67), disposée sur la seconde bride (65), dans laquelle la première jauge de contrainte (64) et/ou la seconde jauge de contrainte (67) sont adaptées pour modifier leur résistance respective en fonction d'un changement de longueur de la première bride (62) ou de la seconde bride (65) dû à une dilatation du matériau.

6. Unité de motorisation (1) selon la revendication 5,
- comprenant en outre un boîtier de moteur (3), dans laquelle la première extrémité de bride (63) et la seconde extrémité de bride (66) sont adaptées pour monter la cellule de charge (5) sur un siège de support de cellule de charge sur le boîtier de moteur (3) de l'unité de motorisation (1), et une seconde bague extérieure (91) étant montée sur un second support de roulement du boîtier de moteur (3).

7. Unité de motorisation (1) selon l'une des revendications précédentes,
- comprenant en outre un codeur angulaire (11) pour déterminer une position radiale de la broche (10),
- l'unité d'évaluation (8) étant configurée pour déterminer la rotation de la broche (10) à l'aide du codeur angulaire (11) .

8. Unité de motorisation (1) selon l'une des revendications précédentes,
- dans laquelle l'unité d'évaluation (8) est configurée pour mettre le moteur électrique (2) hors tension, partiellement ou totalement, en fonction d'une relation de vitesse de rotation, de force et/ou de couple entre l'élément d'entraînement et la broche (10).

9. Unité de motorisation (1) selon l'une des revendications précédentes,
- dans laquelle l'unité d'évaluation (8) est configurée pour mesurer et/ou contrôler un courant appliqué au moteur électrique (2).

10. Unité de motorisation (1) selon la revendication 9,
- dans laquelle l'unité d'évaluation (8) est configurée pour déterminer la rotation du moteur (2) sur la base du courant mesuré.

11. Unité de motorisation (1) selon l'une des revendications précédentes,
- dans laquelle l'unité de motorisation (1) comprend une roue dentée qui est en relation de rotation fixe avec le support de roue dentée (340), la roue dentée étant adaptée à entraîner une chaîne.

12. Unité de motorisation (1) selon l'une des revendications précédentes,
- l'unité de motorisation (1) comprenant en outre un engrenage qui assure une relation de rotation fixe avec un rapport de transmission entre le moteur électrique (2) et l'élément d'entraînement.

13. Unité de motorisation (1) selon la revendication 12,
- dans laquelle l'engrenage est un engrenage à bague de broche.

14. Bicyclette à assistance électrique, comprenant une unité de motorisation (1) selon l'une des revendications précédentes.
